# EUROPEAN PATENT APPLICATION

(11) **EP 2 987 404 A1**
(43) Date of publication of application: **24.02.2016**
(21) Application number: 14784796.6
(22) Date of filing: 17.04.2014
(51) Int. Cl.: A01M 7/00

(54) **INJECTION DEVICE FOR POWDERED DRUGS AND INJECTION METHOD FOR POWDERED DRUGS**

(30) Priority: 17.04.2013 JP 2013086722; 01.07.2013 JP 2013137894; 01.07.2013 JP 2013137895
(71) Applicant: Earth Chemical Co., Ltd., Chiyoda-ku Tokyo 101-0048 (JP)
(72) Inventor: MIYAJI, Ryuta, Ako-shi Hyogo 678-0192 (JP); ATARASHI, Mikihiko, Ako-shi Hyogo 678-0192 (JP); MATSUBARA, Akira, Ako-shi Hyogo 678-0192 (JP); TAKAHASHI, Naoki, Ageo-shi Saitama 362-0066 (JP)
(74) Representative: Grünecker Patent- und Rechtsanwälte PartG mbB
(86) International application number: PCT/JP2014/060978
(87) International publication number: WO 2014/171522

(57) **Abstract**

An injection device (1) for powdered drugs comprises: a cylindrical guide member (21) mounted to a container body (11); a gas generating agent (43) that is accommodated in a cylindrical section (26); a cylindrical breaking member (31) that drops the gas generating agent (43) into water in the container body (11) by breaking a sealing portion (41); a piston (63) that slides against a bottom sliding inner circumferential wall (53) in an airtight manner and that defines a gap with an upper enlarged diameter inner circumferential wall (55); and a powdered drug (30) that is accommodated on the piston (63).

## Description

### TECHNICAL FIELD

The present invention relates to a device for spraying powdery chemical agent for spraying and diffusing a powdery chemical agent, such as an insecticide, etc., and a process for spraying powdery chemical agent.

### BACKGROUND ART

In order to exterminate insect pests existing in the interior of a room, as an insecticide of a single-use type of spreading the whole amount of a chemical agent in the interior of a room, there have hitherto been known various types inclusive of not only a fumigation type to be used by burning an insecticidal composition but also a type not using a fire, such as a thermal evaporation type using water, an aerosol type for spraying by a propellant, a pump type of spraying a solution by a pump, etc.

The insecticide of a fumigation type is one in which a combination of an insecticidal component with an exothermic agent and an auxiliary heating agent is charged in a container. The insecticidal component or combusting agent is burnt by ignition with a starting tool. On that occasion, finely divided particles of the insecticidal component are spread as a smoke in the interior of a room (see Patent Literature 1).

In the insecticide of a thermal evaporation type, the insecticidal component is diffused from a container heated by a heat of reaction of water and calcium oxide, etc. by a power of a foaming agent (see Patent Literature 2).

The insecticide of an aerosol type is one in which the insecticidal component is dissolved in a liquefied gas, such as an LP gas, etc., and compression filled in a pressure resistant container, and the insecticidal component is spouted out in the form of a fine mist. The single-use type has a structure in which a push button is irreversibly locked, and the whole amount of the chemical agent is sprayed (see Patent Literature 3).

The insecticide of a pump type is one in which the insecticidal component is dissolved in a solvent and stored in a liquid container, and the insecticidal component is spouted out in the form of a fine mist by the action of a pressure pump connected with the liquid container (see Patent Literature 4).

### CITATION LIST

### PATENT LITERATURE

Patent Literature 1: JP-A-2003-289782
Patent Literature 2: JP-A-2007-326851
Patent Literature 3: JP-A-2006-35065
Patent Literature 4: JP-A-2011-11181

### SUMMARY OF INVENTION

### TECHNICAL PROBLEM

However, the above-described conventional insecticides of a single-use type involved such a problem that the insecticidal component capable of being used is restricted, That is, in the insecticides of a fumigation type or a thermal evaporation type, since the insecticidal component is heated at an extremely high temperature, it is liable to be affected by the heat, and hence, the insecticidal component to be used is apt to be restricted. In addition, in the insecticides of an aerosol type or a pump type, the insecticidal component is dissolved in a solvent or a liquefied gas and sprayed, and thus, insecticidal components which are low in solubility or insecticidal components that are instable in liquid state cannot be used.

Furthermore, in the insecticides of these types, when the combusting agent is burnt, or the foaming agent is decomposed, a solvent apart from the insecticidal component or a medium, such as a decomposed gas (acidic gas), a liquefied gas, etc., is spread in the interior of a room. Then, advance preparations, such as covering a precision instrument, e.g., a personal computer, an audio instrument, etc., covering a fire alarm, extinguishing a pilot light of a gas water heater, etc., were necessary.

In consequence, in view of the foregoing circumstances, the present invention has been made, and an object thereof is to provide a device for spraying powdery chemical agent which is suppressed in terms of the decomposition of a powdery chemical agent to be caused due to heat or the like in the chemical agent and which is capable of spraying and diffusing a powdery chemical agent without using a medium, such as a decomposed gas, a liquefied gas, a solvent, etc., and a process for spraying powdery chemical agent.

### SOLUTION TO PROBLEM

The foregoing object of the present invention is attained by the following constitutions.
(1) A device for spraying powdery chemical agent, the device including:
   a container body for storing liquid therein, the container body having an upper end opening;
   a tubular guide member including:
      a lid part covering the upper end opening;
      a tubular part formed in the lid part so as to penetrate into the lid part, both ends of the tubular part facing an interior and an exterior of the container body; and
      a sealing part extending inward the container body and sealing a lower end opening of the tubular part, the tubular guide member being installed in the upper end opening;
   a gas generating agent that reacts with the liquid stored in the container body to generate reactive gas, the gas generating agent being contained in the tubular part;
   a tubular rupturing member held by the tubular guide member in a movable state toward the sealing part, wherein a pressing part is provided on a lower end part of the tubular rupturing member and breaks the sealing part to allow the gas generating agent to fall in the liquid stored in the container body;
   a piston sliding airtightly against a lower side sliding inner peripheral wall of a cylinder part provided in an upper end part of the tubular rupturing member, and defining an air space relative to an upper side diameter-enlarged inner peripheral wall of the cylinder part; and
   a powdery chemical agent that is a chemical agent itself or a chemical agent impregnated in or mixed with a powder, the powdery chemical agent being stored on the piston.
(2) The device for spraying powdery chemical agent as set forth above in (1), wherein the piston includes a tubular piston body having a closed-bottom and a vapor tap hole bored in a vicinity of a bottom of a peripheral wall of the piston body; and
   wherein a sealing part is provided in an upper end part of the upper side diameter-enlarged inner peripheral wall and slides airtightly against a peripheral wall of the piston body.
(3) The device for spraying powdery chemical agent as set forth above in (2), wherein a cap provided with a spray nozzle is provided on an upper open end of the piston body.
(4) The device for spraying powdery chemical agent as set forth above in any one of (1) to (3), wherein a lock mechanism obstructing a movement of the tubular rupturing member toward the sealing part is provided between the tubular guide member and the tubular rupturing member.
(5) A device for spraying powdery chemical agent, the device including:
   a container body for storing liquid therein, the container body having an upper end opening;
   a bag body which is covered on an upper opening of the container body and stores a gas generating agent therein, the gas generating agent reacting with the liquid stored in the container body to generate reactive gas;
   a tubular guide member installed in an upper part of the container body;
   a tubular rupturing member which is held by the tubular guide member in a movable state toward the bag body, and includes a tip blade for rupturing the bag body to allow the gas generating agent to fall in the liquid stored in the container body;
   a cylinder part disposed inward the tubular rupturing member, wherein both open ends of the cylinder part are able to communicate an interior and an exterior of the container body with each other;
   a piston sliding airtightly against a lower side sliding inner peripheral wall of the cylinder part and having an air space relative to an upper side diameter-enlarged inner peripheral wall of the cylinder part; and
   a powdery chemical agent that is a chemical agent itself or a chemical agent impregnated in or mixed with a powder, the powdery chemical agent being stored in the piston.
(6) The device for spraying powdery chemical agent as set forth above in (5), wherein a lock mechanism obstructing a movement of the tubular rupturing member toward the bag body is provided between the tubular guide member and the tubular rupturing member.
(7) The device for spraying powdery chemical agent as set forth above in (5) or (6), wherein a cap provided with a spray nozzle is provided on an upper side open end side of the cylinder part.
(8) The device for spraying powdery chemical agent as set forth above in any one of (5) to (7), wherein the tip blade formed into annular shape so as to be opposed to an upper surface of the bag body on the outside of a radial direction from a lower side open end of the cylinder part breaks the bag body such that the bag body is annularly bored.
(9) A device for spraying powdery chemical agent, the device including:
   a container body having an upper end opening;
   a cylinder installed in a lid body covering the upper end opening, both ends of the cylinder face an interior and an exterior of the container body;
   a powdery chemical agent that is a chemical agent itself or a chemical agent impregnated in or mixed with a powder, the powdery chemical agent being contained in the cylinder; and
   a piston sliding airtightly against a lower side sliding inner peripheral wall of the cylinder, and having an air space relative to an upper side diameter-enlarged inner peripheral wall of the cylinder,
   wherein reactive gas is generated in the container body to push the piston up along the lower side sliding inner peripheral wall.
(10) The device for spraying powdery chemical agent as set forth above in (9), wherein a spray nozzle is provided on an upper side open end of the cylinder.
(11) The device for spraying powdery chemical agent as set forth above in (10), wherein the piston which has reached the upper side diameter-enlarged inner peripheral wall of the cylinder is obstructed from the movement toward the spray nozzle.
(12) A device for spraying powdery chemical agent, the device including:
   a container body for storing liquid therein;
   a first cap installed in the first opening and including:
      a lid part covering a first opening of the container body; and
      a cylinder part formed in the lid part so as to penetrate into the lid part, both ends the cylinder part facing an interior and an exterior of the container body;
   a piston sliding airtightly against a sliding inner peripheral wall of the cylinder part, and having an air space relative to a diameter-enlarged inner peripheral wall of the cylinder part;
   a powdery chemical agent that is a chemical agent itself or a chemical agent impregnated in or mixed with a powder, the powdery chemical agent being contained in a housing chamber defined by the diameter-enlarged inner peripheral wall;
   a second cap installed in a second opening of the container body and including:
      a lid part covering the second opening of the container body;
      a tubular part formed in the lid part so as to penetrate into the lid part, both ends of the tubular part facing an interior and an exterior of the container body; and
      a sealing part extending inward the container body and sealing an interior side opening of the tubular part;
   a gas generating agent that reacts with the liquid stored in the container body to generate reactive gas, the gas generating agent being contained in the tubular part; and
   a rupturing member which is held by the second cap in a movable state toward the sealing part, wherein a pressing part is provided on a tip part of the rupturing member and breaks the sealing part to incorporate the gas generating agent into the liquid stored in the container body.
(13) The device for spraying powdery chemical agent as set forth above in (12), wherein an elasticity energizing member provided on the first cap applies a prescribed resistance force to the piston moving from the sliding inner peripheral wall to the diameter-enlarged inner peripheral wall.
(14) A method for spraying powdery chemical agent, the method including:
   a step of generating reactive gas within a container body having an opening;
   a step of installing a lid body, which is installed with a cylinder, in the opening such that an inward side open end of the cylinder faces an interior of the container body and an outward side open end of the cylinder faces an exterior of the container body, wherein the cylinder contains a piston, a powdery chemical agent that is a chemical agent itself or a chemical agent impregnated in or mixed with a powder is stored in the piston, and the piston slides airtightly against a sliding inner peripheral wall and has an air space relative to a diameter-enlarged inner peripheral wall; and
   a step of moving the piston from the sliding inner peripheral wall to the diameter-enlarged inner wall by a pressure the reactive gas which has reached a prescribed pressure value or more within the container body, thereby spraying and diffusing the powdery chemical agent stored in the cylinder.

According to the device for spraying powdery chemical agent as set forth above in (1), when the tubular rupturing member held by the tubular guide member is moved toward the sealing part upon receiving an operating force, the pressing part of the tubular rupturing member breaks the sealing part, thereby allowing the gas generating agent within the tubular part to fall in the liquid stored in the container body. In view of the fact that the gas generating agent which has fallen in the liquid reacts with the liquid stored in the container body to generate reactive gas, the pressure within the container body becomes high. When the pressure within the container body reaches a prescribed value or more, the piston within the cylinder part is pushed up. Then, when the piston reaches the upper side diameter-enlarged inner peripheral wall, the high-pressure reactive gas within the container body is released at once from the air space between the upper side diameter-enlarged inner peripheral wall and the piston, whereby the powdery chemical agent is sprayed and diffused at once from the top of the piston to the outside due to the air pressure of the high-pressure gas within the container body.

That is, the reactive gas that sprays and diffuses the powdery chemical agent is confined within the container body until the pressure within the container body reaches a prescribed value or more and the piston reaches the upper side diameter-enlarged inner peripheral wall. When the piston reaches the upper side diameter-enlarged inner peripheral wall, the reactive gas is released at once from the air space relative to the upper side diameter-enlarged inner peripheral wall, whereby it is sprayed at once outside the cylinder part. Thus, the high-pressure reactive gas can be obtained without utilizing an explosive reaction accompanied with heat, or the like.

In consequence, it is not needed to fume a fumigant by burning a chemical agent, or to heat and evaporate a powdery chemical agent by using a hydration exothermic agent for indirectly heating a foaming agent as in the conventional art. As a result, the heat is not applied to the powdery chemical agent, so that chemical agents that are weak to heat can be used. In addition, it is not needed to dissolve a chemical agent in a solvent or a liquefied gas as in an aerosol type or a pump type, so that chemical agents that are low in solubility or chemical agents that are instable in a solution state can also be used.

According to the device for spraying powdery chemical agent as set forth above in (2), the powdery chemical agent can be contained in the piston body. The high-pressure gas which has been released at once from the air space between the upper side diameter-enlarged inner peripheral wall of the cylinder part and the piston flows into the piston body from the vapor tap hole and is sprayed and diffused at once outside the cylinder part while swirling up the powdery chemical agent within the piston body at a high speed.

According to the device for spraying powdery chemical agent as set forth above in (3), the high-pressure gas which has been released at once from the air space between the piston and the upper side diameter-enlarged inner peripheral wall flows into the piston body from the vapor tap hole, and its flow velocity is more increased by the spray nozzle of the cap, and therefore, the powdery chemical agent within the piston body is more surely sprayed and diffused into the outside.

According to the device for spraying powdery chemical agent as set forth above in (4), the matter that the tubular rupturing member held by the tubular guide member carelessly moves toward the sealing part to break the sealing part is prevented from occurring.

According to the device for spraying powdery chemical agent as set forth above in (5), when the tubular rupturing member held by the tubular guide member is moved toward the bag body upon receiving an operating force, the tip blade of the tubular rupturing member breaks the bag body, thereby allowing the gas generating agent within the bag body to fall in the liquid within the container body. In view of the fact that the gas generating agent which has fallen in the liquid reacts with the liquid within the container body to generate reactive gas, the pressure within the container body becomes high. When the pressure within the container body reaches a prescribed value or more, the piston within the cylinder part is pushed up. Then, when the piston reaches the upper side diameter-enlarged inner peripheral wall, the high-pressure reactive gas within the container body is released at once from the air space between the upper side diameter-enlarged inner peripheral wall and the piston, whereby the powdery chemical agent is sprayed and diffused at once into the outside of the cylinder part due to an air pressure of the high-pressure gas within the container body.

That is, the reactive gas that sprays and diffuses the powdery chemical agent is confined within the container body until the pressure within the container body reaches a prescribed value or more, and the piston reaches the upper side diameter-enlarged inner peripheral wall, and when the piston reaches the upper side diameter-enlarged inner peripheral wall, the reactive gas is released at once from the air space relative to the upper side diameter-enlarged inner peripheral wall, whereby it is sprayed at once from the upper side open end of the cylinder part. Thus, the high-pressure reactive gas can be obtained without utilizing an explosive reaction accompanied with heat, or the like.

In consequence, it is not needed to fume a fumigant by burning a chemical agent, or to heat and evaporate a powdery chemical agent by using a hydration exothermic agent for indirectly heating a foaming agent as in the conventional art. As a result, the heat is not applied to the powdery chemical agent, so that chemical agents that are weak to heat can be used. In addition, it is not needed to dissolve a chemical agent in a solvent or a liquefied gas as in an aerosol type or a pump type, so that chemical agents that are low in solubility or chemical agents that are instable in a solution state can also be used.

According to the device for spraying powdery chemical agent as set forth above in (6), the matter that the tubular rupturing member held by the tubular guide member carelessly moves toward the bag body to break the bag body is prevented from occurring.

According to the device for spraying powdery chemical agent as set forth above in (7), in the high-pressure gas which has been released at once from the air space between the piston and the upper side diameter-enlarged inner peripheral wall, its flow velocity is more increased by the spray nozzle of the cap, and the powdery chemical agent within the cylinder part is more surely sprayed and diffused into the outside of the cylinder part.

According to the device for spraying powdery chemical agent as set forth above in (8), the tip blade formed annularly so as to be opposed to the upper surface of the bag body on the outside of the radial direction from the lower side open end of the cylinder part breaks the bag body such that it is annularly bored, and therefore, the gas generating agent housed in the bad body can be surely allowed to fall in the liquid within the container body.

According to the device for spraying powdery chemical agent as set forth above in (9), for example, in view of the fact that the gas generating agent reacts with the liquid within the container body, or the like to generate reactive gas, the pressure within the container body becomes high. When the pressure within the container body reaches a prescribed value or more, the piston within the cylinder is pushed up. Then, when the piston reaches the upper side diameter-enlarged inner peripheral wall, the high-pressure reactive gas within the container body is released at once from the air space between the upper side diameter-enlarged inner peripheral wall and the piston, whereby the powdery chemical agent is sprayed and diffused at once into the outside of the cylinder due to an air pressure of the high-pressure gas within the container body.

That is, the reactive gas that sprays and diffuses the powdery chemical agent is confined within the container body until the pressure within the container body reaches a prescribed value or more, and the piston reaches the upper side diameter-enlarged inner peripheral wall, and when the piston reaches the upper side diameter-enlarged inner peripheral wall, the reactive gas is released at once from the air space relative to the upper side diameter-enlarged inner peripheral wall, whereby it is sprayed at once from the upper side open end of the cylinder. Thus, the high-pressure reactive gas can be obtained without utilizing an explosive reaction accompanied with heat, or the like.

In consequence, it is not needed to fume a fumigant by burning a chemical agent, or to heat and evaporate a powdery chemical agent by using a hydration exothermic agent for indirectly heating a foaming agent as in the conventional art. As a result, the heat is not applied to the powdery chemical agent, so that chemical agents that are weak to heat can be used. In addition, it is not needed to dissolve a chemical agent in a solvent or a liquefied gas as in an aerosol type or a pump type, so that chemical agents that are low in solubility or chemical agents that are instable in a solution state can also be used.

According to the device for spraying powdery chemical agent as set forth above in (10), in the high-pressure gas which has been released at once from the air space between the piston and the upper side diameter-enlarged inner peripheral wall, its flow velocity is more increased by the spray nozzle, and the powdery chemical agent within the cylinder is more surely sprayed and diffused into the outside of the cylinder.

According to the device for spraying powdery chemical agent as set forth above in (11), the movement of the piston which has reached the upper side diameter-enlarged inner peripheral wall of the cylinder to the spray nozzle side is obstructed, and therefore, the matter that the piston which has been pushed up within the cylinder due to an air pressure of the high-pressure gas covers the spray nozzle can be prevented from occurring.

According to the device for spraying powdery chemical agent as set forth above in (12), when the rupturing member held by the second cap is moved toward the sealing part upon receiving an operating force, the pressing part of the rupturing member breaks the sealing part, thereby incorporating the gas generating agent within the tubular part into the liquid within the container body. In view of the fact that the gas generating agent which has been incorporated into the liquid reacts with the liquid within the container body to generate reactive gas, the pressure within the container body becomes high. When the pressure within the container body reaches a prescribed value or more, the piston within the cylinder part is moved. Then, when the piston reaches the diameter-enlarged inner peripheral wall from the sliding inner peripheral wall, the high-pressure reactive gas within the container body is released at once from the air space between the diameter-enlarged inner peripheral wall and the piston, whereby the powdery chemical agent is sprayed and diffused at once from the housing chamber due to an air pressure of the high-pressure gas within the container body.

That is, the reactive gas that sprays and diffuses the powdery chemical agent is confined within the container body until the pressure within the container body reaches a prescribed value or more, and the piston reaches the diameter-enlarged inner peripheral wall, and when the piston reaches the diameter-enlarged inner peripheral wall, the reactive gas is released at once from the air space relative to the diameter-enlarged inner peripheral wall, whereby it is sprayed at once into the outside of the cylinder part. Thus, the high-pressure reactive gas can be obtained without utilizing an explosive reaction accompanied with heat, or the like.

In consequence, it is not needed to fume a fumigant by burning a chemical agent, or to heat and evaporate a powdery chemical agent by using a hydration exothermic agent for indirectly heating a foaming agent as in the conventional art. As a result, the heat is not applied to the powdery chemical agent, so that chemical agents that are weak to heat can be used. In addition, it is not needed to dissolve a chemical agent in a solvent or a liquefied gas as in an aerosol type or a pump type, so that chemical agents that are low in solubility or chemical agents that are instable in a solution state can also be used.

According to the device for spraying powdery chemical agent as set forth above in (13), in view of the fact that the gas generating agent which has been incorporated into the liquid reacts with the liquid within the container body to generate reactive gas, when the pressure of the container body reaches a prescribed value or more, the piston within the cylinder part is moved resisting a resistance force due to a repulsive force of the elasticity energizing member. Thus, by properly changing the repulsive force of the elasticity energizing member, a prescribed pressure within the container body for moving the piston within the cylinder part to the diameter-enlarged inner peripheral wall can be easily controlled.

According to the process for spraying powdery chemical agent as set forth above in (14), when the reactive gas is generated within the container body, the pressure within the container body reaches a prescribed value or more, and the piston within the cylinder is moved to reach the diameter-enlarged inner peripheral wall from the sliding inner peripheral wall, the high-pressure reactive gas within the container body is released at once from the air space between the diameter-enlarged inner peripheral wall and the piston, and the powdery chemical agent is sprayed and diffused at once into the outside of the cylinder due to an air pressure of the high-pressure gas within the container body. That is, the reactive gas that sprays and diffuses the powdery chemical agent is confined within the container body until the pressure within the container body reaches a prescribed value or more, and the piston reaches the diameter-enlarged inner peripheral wall from the sliding inner peripheral wall, and when the piston reaches the diameter-enlarged inner peripheral wall, the reactive gas is released at once from the air space relative to the diameter-enlarged inner peripheral wall, whereby it is sprayed at once from the outer side open end of the cylinder. Thus, the high-pressure reactive gas can be obtained without utilizing an explosive reaction accompanied with heat, or the like.

That is, it is not needed to fume a fumigant by a burning agent or heat of an exothermic body, or to diffuse a powdery chemical agent by heating a foaming agent to utilize a decomposed gas generated upon decomposition of the foaming agent as in the conventional art. As a result, the heat is not applied to the powdery chemical agent, so that chemical agents that are weak to heat can also be used. In addition, it is not needed to dissolve a chemical agent in a solvent or a liquefied gas as in the conventional aerosol type or pump type, so that chemical agents that are low in solubility or chemical agents that are instable in liquid state can also be used.

In the light of the above, the present invention has been concisely explained. Furthermore, details of the present invention will be further clarified by reading modes for carrying out the invention as explained below (hereinafter referred to as "embodiments") by reference to accompanying drawings.

### BRIEF DESCRIPTION OF DRAWINGS

FIG. 1(a) is an entire front view showing an outline of a device for spraying powdery chemical agent according to a first embodiment of the present invention, and FIG. 1(b) is an A-A cross-sectional view of FIG. 1(a).
FIG. 2 is a main part enlarged view of the device for spraying powdery chemical agent shown in FIG. 1(a).
FIG. 3 is a main part enlarged view showing a use state of the device for spraying powdery chemical agent shown in FIG. 2.
Figs. 4(a) to 4(c) are each an explanatory view for explaining procedures of spraying and diffusing a powdery chemical agent using the device for spraying powdery chemical agent shown in FIG. 1.
FIG. 5(a) is an entire perspective view showing an outline of a device for spraying powdery chemical agent according to a second embodiment of the present invention, and FIG. 5(b) is a longitudinal cross-sectional perspective view of FIG. 5(a).

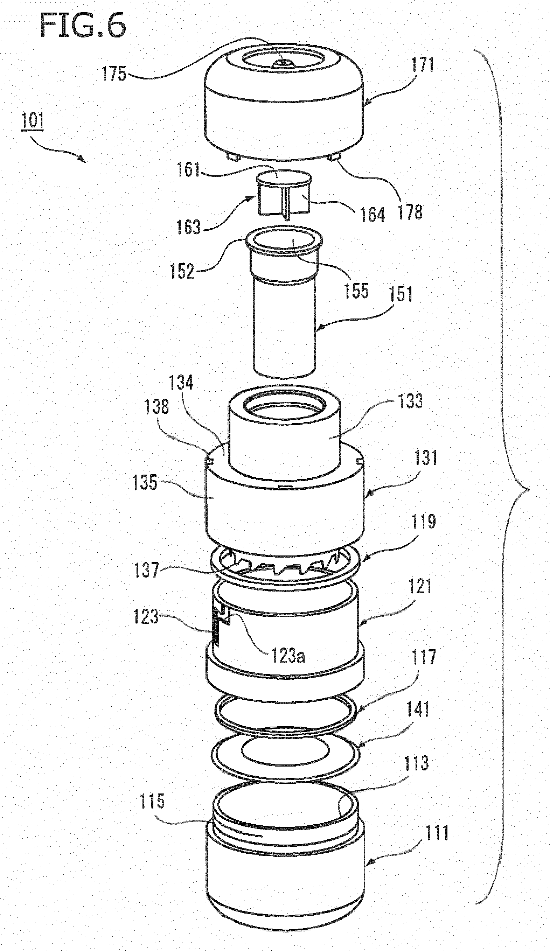

FIG. 6 is an exploded perspective view of the device for spraying powdery chemical agent shown in FIG. 5(a).
FIG. 7(a) is an entire perspective view showing a use state of the device for spraying powdery chemical agent shown in FIG. 5(a), and FIG. 7(b) is a longitudinal cross-sectional perspective view of FIG. 7(a).
FIGs. 8(a) to 8(c) are each an explanatory view for explaining procedures of spraying and diffusing a powdery chemical agent using the device for spraying powdery chemical agent shown in FIG. 5.
FIG. 9 is a longitudinal cross-sectional view showing an outline of a device for spraying powdery chemical agent according to a third embodiment of the present invention.
FIGs. 10(a) to 10(d) are each an explanatory view for explaining procedures of a process for spraying powdery chemical agent by spraying and diffusing a powdery chemical agent using the device for spraying powdery chemical agent shown in FIG. 9.
FIG. 11 is an entire perspective view showing an outline of a device for spraying powdery chemical agent according to a fourth embodiment of the present invention.
FIG. 12 is a B-B cross-sectional view of the device for spraying powdery chemical agent shown in FIG. 11,
FIG. 13 is a C-C cross-sectional view of the device for spraying powdery chemical agent shown in FIG. 11.
FIGs. 14(a) to 14(c) are each an explanatory view for explaining procedures of spraying and diffusing a powdery chemical agent using the device for spraying powdery chemical agent shown in FIG. 11.
FIG. 15 is a diagrammatic plan view for explaining a test plot used for a measuring test of falling amount of chemical agent by the device for spraying powdery chemical agent shown in FIG. 9.

### DESCRIPTION OF EMBODIMENTS

Embodiments of the present invention are hereunder explained in detail by reference to the accompanying drawings.

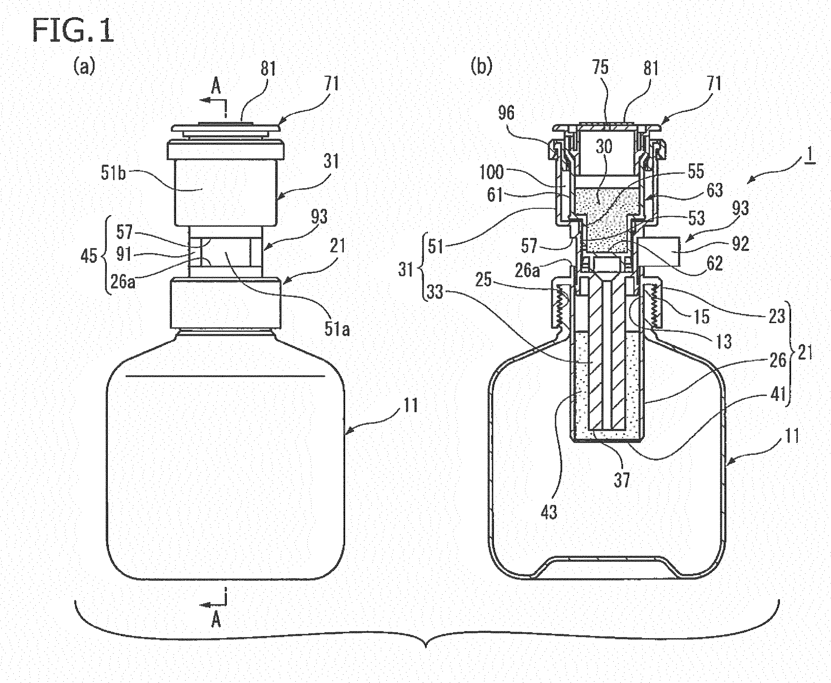

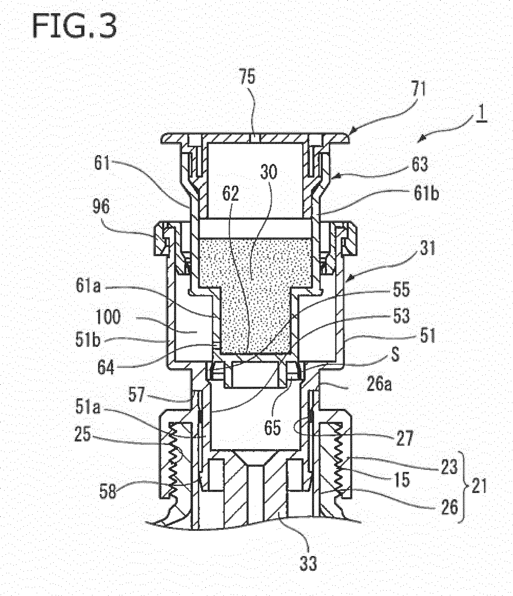

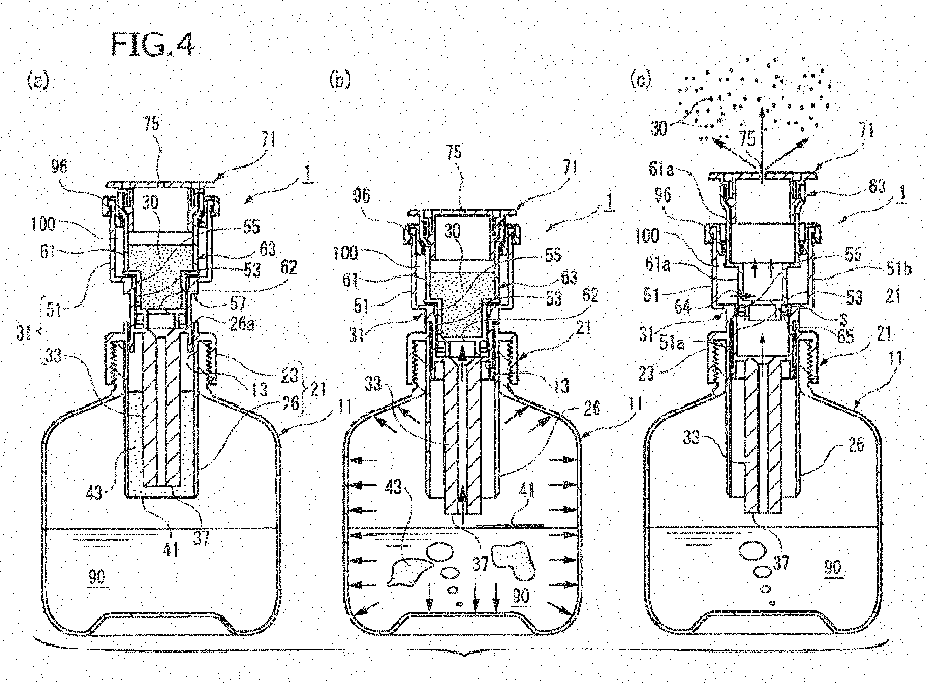

As shown in FIG. 1, a device 1 for spraying powdery chemical agent according a first embodiment of the present invention includes a container body 11 for housing water (liquid) 90 (see FIGs. 4(a) to 4(c)) therein, the container body 11 having an upper end opening 13; a cylindrical tubular guide member 21 to be installed in the upper end opening 13; a gas generating agent 43 to be housed in a tubular part 26 of the tubular guide member 21, the gas generating agent 43 reacting with the water 90 within the container body 11 to generate reactive gas; a tubular rupturing member 31 to be held by the tubular guide member 21 in a movable state toward a sealing part 41 that seals a lower end opening of the tubular part 26, a lower end part of the tubular rupturing member 31 being provided with a pressing part 37 for rupturing the sealing part 41 to allow the gas generating agent 43 to fall in the water 90 within the container body 11; a piston 63 sliding airtightly against a lower side sliding inner peripheral wall 53 of a cylinder part 51 provided in an upper end part of the tubular rupturing member 31 and also defining an air space (S) (see FIG. 3) against an upper side diameter-enlarged inner peripheral wall 55 of the cylinder part 51; and a powdery chemical agent 30 to be stored within a piston body 61 of the piston 63.

The container body 11 of the first embodiment is a pressure resistant container having the upper end opening 13 and integrally molded with a resin, such as PET (polyethylene terephthalate), etc. The container body 11 may take a variety of shapes so long as it has a shape having the upper end opening 13 and capable of being stably placed on the floor face. In addition, so long as the container body 11 has prescribed pressure resistance to an increase of the internal pressure, it is not limited to a resin container, but a variety of containers, such as metal containers, ceramic containers, glass containers, etc., can be used.

The tubular guide member 21 of the first embodiment has a lid part 23 covering the upper end opening 13; the tubular part 26 formed penetrating into the lid part 23, both ends thereof facing an interior and an exterior of the container body 11; and the sealing part 41 extending inward the container body 11 and sealing the lower end opening of the tubular part 26.

In the lid part 23, a screw thread 25 is screwed with a screw thread 15 provided on the outer peripheral surface of the upper end opening 13 of the container body 11, and the lid part 23 is detachably installed in the upper end opening 13.

The sealing part 41 that seals the lower end opening of the tubular part 26 extending inward the container body 11 is, for example, one in which an outer peripheral part of a circular sheet is fixed to the lower end opening of the tubular part 26 by means of heat sealing, an adhesive, or the like. Though the sealing part 41 has a sufficient fixing force for supporting the weight of the gas generating agent 43 housed within the tubular part 26, it is constituted in such a manner that when a pressing force of a prescribed value or more is given by the pressing part 37 of the tubular rupturing member 31, the fixed part in the outer peripheral part is broken and peeled away.

The tubular rupturing member 31 of the first embodiment has a cylindrically formed main body part 33 having a diameter smaller than the tubular part 26 of the tubular guide member 21 and the cylinder part 51 provided in an upper end part of the main body part 33 and is held by the tubular guide member 21 in a movable state toward the sealing part 41. In the tubular rupturing member 31, the main body part 33 is inserted from an upper opening of the tubular part 26, and the tubular rupturing member 31 is disposed inward the tubular part 26 such that both open ends thereof are able to communicate the interior and the exterior of the container body 11 with each other.

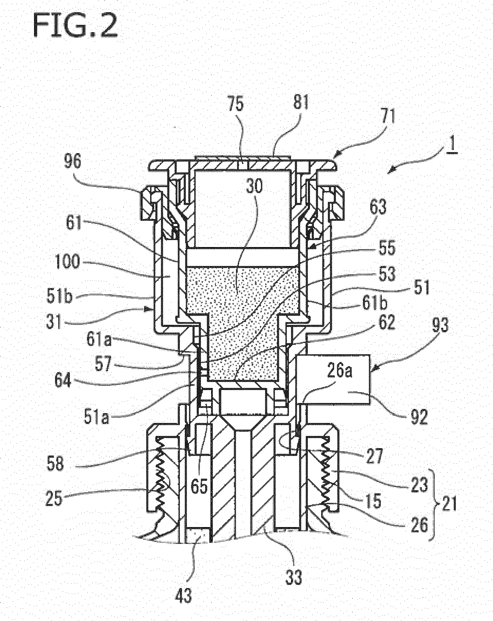

In a lower end part of the main body part 33, the pressing part 37 that breaks the sealing part 41 to allow the gas generating agent 43 to fall in the water 90 within the container body 11 is provided. A small-diameter part 51a of the cylinder part 51 that constitutes the lower side sliding inner peripheral wall 53 is inwardly fitted onto the inner peripheral surface of the tubular part 26, and the pressing part 37 of the main body part 33 is held by the tubular part 26 in a movable state toward the sealing part 41 (see FIG. 2). A large-diameter part 51 b of the cylinder part 51 defines a chamber 100 relative to the piston body 61 as described later.

As shown in FIGs. 1(a) and 1(b) and FIG. 2, a lock mechanism 45 that obstructs the movement of the tubular rupturing member 31 held by the tubular guide member 21 toward the sealing part 41 is provided between the tubular guide member 21 and the tubular rupturing member 31.

The lock mechanism 45 has a gripping part 93 having a C-shaped cross-section of a stopper member 91 to be installed in the small-diameter part 51 a of the cylinder part 51; an upper end part 26a of the tubular part 26 coming into contact with a lower end edge of the gripping part 93; and a step part 57 of the cylinder part 51 coming into contact with an upper end edge of the gripping part 93. That is, as shown in FIG. 1(a), the tubular rupturing member 31 is held in such a state that when the gripping part 93 of the stopper member 91 is made to interpose in a space relative to the upper end part 26a to which the step part 57 is opposed, the movement of the tubular rupturing member 31 toward the sealing member 41 by a pushing operation is obstructed. In the stopper member 91, a clipping part 92 acting as an operating part on the occasion of removing the gripping part 93 is projected.

Then, on the occasion of moving the pressing part 37 of the tubular rupturing member 31 toward the sealing part 41, as shown in FIG. 4(a), by removing the stopper member 91 from the cylinder part 51 to cancel the interposed state of the gripping part 93 between the step part 57 and the upper end part 26a, it becomes possible to make the tubular rupturing member 31 move toward the sealing part 41. It is to be noted that as shown in FIG. 4(b), in the tubular rupturing member 31 in which the pressing part 37 has reached the breaking position of the sealing part 41, when the step part 57 comes into contact with the upper end part 26a of the tubular part 26 to regulate the pushing position, soak of the lower end part of the main body part 33 in the water 90 within the container body 11 is prevented from occurring.

That is, the lock mechanism 45 of the first embodiment prevents the movement of the tubular rupturing member 31 held by the tubular guide member 21 in a movable state toward the sealing part 41 from occurring upon being carelessly pushed at the time of keeping the device 1 for spraying powdery chemical agent, or the like.

As shown in FIG. 2, the cylinder part 51 is a stepped pipe having a different inner diameter from each other, and a sealing member (sealing part) 96 sliding airtightly against the peripheral wall of the piston body 61 as described later is provided in an upper end part thereof, whereas an engagement projection 58 which is engaged with a locking part 27 of the tubular part 26 to retain the tubular rupturing member 31 is provided in a lower end part thereof.

Furthermore, the cylinder part 51 communicates the interior and the exterior of the container body 11 with each other via the main body part 33 and includes the lower side sliding inner peripheral wall 53 on which the piston body 61 of the housed piston 63 slides airtightly and the upper side diameter-enlarged inner peripheral wall 55 that defines the air space (S) relative to the piston body 61.

As shown in FIG. 2, the piston 63 has the closed-end cylindrical piston body 61 having a circular bottom 62 and a vapor tap hole 64 bored in the neighborhood of the bottom 62 of a peripheral wall of the piston body 61.

The peripheral wall of the piston body 61 has a small-diameter part 61 a sliding airtightly against the lower side sliding inner peripheral wall 53 of the cylinder part 51 and a large-diameter part 61 b sliding airtightly against a lid part of the sealing member 96 provided in the upper end part of the cylinder part 51. Furthermore, the large-diameter part 61 b of the piston body 61 defines the chamber 100 relative to the large-diameter part 51 b of the cylinder part 51.

In a lower face outer peripheral part of the bottom 62 of the piston body 61, a cup-shaped skirt part 65, a tip of which extends in the diameter-enlarged direction, is provided. In the skirt part 65, when a high-pressure gas acts from the lower side, it causes elastic deformation in the direction where its tip part comes into close contact with the lower side sliding inner peripheral wall 53, thereby ensuring airtightness.

The powdery chemical agent 30 is stored within the piston body 61. In an upper open end of the piston body 61, a cap 71 provided with a spray nozzle 75 is cladded. Furthermore, the spray nozzle 75 is sealed by a sealing member 81. The sealing member 81 is a sealing member that seals the spray nozzle 75 and is formed of a resin sheet which is stuck to the spray nozzle 75 and peeled away at the time of use. It is to be noted that a sealing film which is rupturable by a gas pressure can also be used as the sealing member that seals the spray nozzle 75. As the sealing film, for example, a Parafilm (trade name: PARAFILM M, Model No.: PM996, manufactured by Pechiney Plastic Packaging, Inc.) can be used.

That is, by merely fitting the spray nozzle 75 of the cap 71 in the upper open end of the piston body 61 positioning on the exterior side of the container body 11, the inside of the piston body 61 can be hermetically sealed at the time of preservation.

The powdery chemical agent 30 is, for example, one in which a chemical agent, such as cyphenothrin (pyrethroid-based insecticide), dinotefuran that is a non-volatile insecticide, etc., is impregnated in or mixed with, for example, calcium silicate (trade name: FLUORITE RN, manufactured by Tokuyama Corporation) that is an inorganic powder. It is to be noted that as a matter of course, the chemical agent which is impregnated in or mixed with the powder is not limited to insecticides containing an insecticidal component as an active ingredient, but a variety of chemical agents, such as an aromatic, a deodorant, a disinfectant, etc., can be used. Furthermore, a variety of powders inclusive of inorganic powders, such as calcium silicate, silicic anhydride, etc., organic powders, such as a cellulose bead, a starch powder, etc., and the like, can be used as the powder for impregnating a chemical agent therein. In addition, a chemical agent that is a powder itself can also be used as the powdery chemical agent.

In the first embodiment, the liquid to be housed within the container body 11 is the water 90, and the gas generating agent 43 to be housed in the tubular part 26 of the tubular guide member 21 is sodium bicarbonate and citric acid. Thus, when the gas generating agent 43 is put into the water 90 within the container body 11, it reacts in the water 90 to generate a carbon dioxide gas (G) that is the reactive gas. It is to be noted that needless to say, the liquid or the gas generating agent is not limited to the water 90 or sodium bicarbonate and citric acid, but a variety of liquids or gas generating agents can be used. However, the reactive gas generated by the gas generating agent is desirably one that is not only noninflammable but also innoxious against a human body or the like and does not generate high heat at the time of reaction, such as a carbon dioxide gas, etc.

Next, procedures of spraying and diffusing an insecticide using the device 1 for spraying powdery chemical agent of the above-described first embodiment are explained by reference to FIG. 2, FIG. 3, and FIGs. 4(a) to 4(c). For the purpose of spreading the insecticide to exterminate insect pests existing in the interior of a room, such as a cockroach, a tropical rat mite, etc., the device 1 for spraying powdery chemical agent is placed in the center of a floor of the room and used.

A prescribed amount of the water 90 is previously filled within the container body 11 of the device 1 for spraying powdery chemical agent. Since the water 90 is previously filled within the container body 11, the device 1 for spraying powdery chemical agent can be used as it is at a carrying destination. It is to be noted that a prescribed amount of the water 90 can also be poured later within the container body 11 from the upper end opening 13 of the container body 11 which has been opened by removing the lid part 23 of the tubular guide member 21 of the device 1 for spraying powdery chemical agent. As for the amount of the water 90 to be poured, the water 90 may be poured up to a scale provided in the container body 11 formed of a transparent or translucent resin, or a previously measured amount of the water 90 may also be poured. After pouring the water 90 within the container body 11, the lid part 23 is screwed with the upper end opening 13, thereby hermetically sealing the inside of the container body 11.

In addition, a prescribed amount of a water absorptive polymer or aqueous gel having water held therein may also be previously housed within the container body 11.

The tubular guide member 21 is installed in the upper end opening 13 in such a manner that when the pressing part 37 breaks the sealing part 41, the lower end part of the main body part 33 is not soaked in the water 90 within the container body 11.

Subsequently, as shown in FIG. 4(a), the sealing member 81 sealing the spray nozzle 75 is peeled away such that the upper open end of the piston body 61 faces the exterior. Furthermore, the stopper member 91 is removed from the cylinder part 51.

Then, the tubular rupturing member 31 is subjected to a pushing operation downward via the piston 63 having the cap 71 cladded thereonto.

As shown in FIG. 4(b), the tubular rupturing member 31 which has moved toward the sealing part 41 upon receiving a pushing operating force undergoes break such that the pressing part 37 peels away the fixed part in the outer peripheral part of the sealing part 41.

Thus, an approximately whole amount of the gas generating agent 43 surely falls in the water 90 within the container body 11 together with the sealing part 41 as peeled away.

Then, the gas generating agent 43 composed of sodium bicarbonate and citric acid reacts in the water 90 to generate a carbon dioxide gas (G) that is the reactive gas. The carbon dioxide gas (G) generated within the container body 11 increases step by step, whereby the pressure within the container body 11 becomes high.

When the pressure of the carbon dioxide gas (G) within the container body 11 reaches a prescribed pressure or more, the piston 63 within the cylinder part 51 is pushed up. On this occasion, in the bottom 62 of the piston body 61, the skirt part 65 is provided, and the airtightness against the lower side sliding inner peripheral wall 53 is ensured, and therefore, the pressure of the carbon dioxide gas (G) effectively acts on the piston 63 without causing leakage.

It is to be noted that by properly changing a sliding resistance of the piston 63 to the lower side sliding inner peripheral wall 53 by changing a fit tolerance between the small-diameter part 51 a of the cylinder part 51 and the small-diameter part 61 a of the piston 63, the materials, or the like, or the inner diameter of the lower side sliding inner peripheral wall 53 of the cylinder part 51 and the outer diameter of the small-diameter part 61a of the piston 63, the pressure within the container body 11 when the piston 63 starts to move can be controlled.

Then, as shown in FIG. 3, when the skirt part 65 of the piston 63 reaches the upper side diameter-enlarged inner peripheral wall 55 due to the pressure within the container body 11 of the carbon dioxide gas (G) which has reached a prescribed value or more, the high-pressure carbon dioxide gas (G) within the container body 11 is released at once from the air space (S) between the upper side diameter-enlarged inner peripheral wall 55 and the piston body 61 and flows into the chamber 100 defined between the large-diameter part 51 b of the cylinder part 51 and the small-diameter part 61 a of the piston 63.

As shown in FIG. 4(c), the high-pressure carbon dioxide gas (G) which has flown into the chamber 100 flows into the piston body 61 from the vapor tap hole 64 and is sprayed and diffused at once into the outside of the cylinder part 51 while swirling up the powdery chemical agent 30 within the piston body 61 at a high speed.

Since the cap 71 provided with the spray nozzle 75 is provided in the upper open end of the piston body 61, a flow velocity of the high-pressure gas which has risen while swirling up the powdery chemical agent 30 within the piston body 61 is increased by the spray nozzle 75, and the powdery chemical agent 30 within the piston body 61 is more surely sprayed and diffused into the outside.

In addition, in view of the fact that the large-diameter part 61b of the piston body 61 slides airtightly in the lid part of the sealing member 96 provided in the upper end part of the cylinder part 51, the high-pressure carbon dioxide gas (G) which has flown into the chamber 100 can flow into the piston body 61 from the vapor tap hole 64 without causing leakage.

That is, the carbon dioxide gas (G) that sprays and diffuses the powdery chemical agent 30 is confined within the container body 11 until the gas pressure reaches a prescribed value or more, and the skirt part 65 of the piston 63 reaches the upper side diameter-enlarged inner peripheral wall 55, and when the skirt part 65 of the piston 63 reaches the upper side diameter-enlarged inner peripheral wall 55, the carbon dioxide gas (G) is released at once into the chamber 100 from the air space (S) relative to the upper side diameter-enlarged inner peripheral wall 55 and flows into the piston body 61 from the vapor tap hole 64, whereby it is sprayed at once from the upper side of the piston body 61 (the spray nozzle 75 of the cap 71). For that reason, in the device 1 for spraying powdery chemical agent, the high-pressure carbon dioxide gas (G) can be obtained without utilizing an explosive reaction accompanied with heat, or the like.

In consequence, in the device 1 for spraying powdery chemical agent of the first embodiment, it is not needed to fume a fumigant by heat of a heating element, or to heat and evaporate an insecticide as the chemical agent by using a foaming agent from which a medium other than the chemical agent is generated as in the conventional fumigation type or thermal evaporation type. As a result, the heat is not applied to the insecticidal component as the chemical agent impregnated in calcium silicate of the powdery chemical agent 30, so that insecticidal components that are weak to heat can also be used. In addition, it is not needed to dissolve an insecticidal component in a solvent or a liquefied gas as in the conventional aerosol type or pump type, so that insecticidal components that are low in solubility, or insecticidal components that are instable in a solution state can also be used. In addition, by using a gas that is low in reactivity, such as a carbon dioxide gas, etc., as a medium of the powdery chemical agent, decomposition of the powdery chemical agent or an adverse influence against furniture in a room is not generated, or pollution of the inside of a room, or the like is not generated.

According to the device 1 for spraying powdery chemical agent of the first embodiment as described above, the insecticide as the chemical agent can be sprayed and diffused without using a medium, such as a gas, a solvent, etc.

It is to be noted that the constituent members according to the device for spraying powdery chemical agent of the present invention, such as the container body, the lid body, the tubular part, the sealing part, the tubular guide member, the tubular rupturing member, the pressing part, the cylinder part, the piston, the lock mechanism, the spray nozzle, the powder, the active ingredient of the chemical agent, the powdery chemical agent, the liquid, the gas generating agent, etc., are not limited to the constitutions of the above-described first embodiment, and a variety of modes may be taken on the basis of the gist of the present invention.

The device 1 for spraying powdery chemical agent of the first embodiment as described above is constituted in such a manner that the pressing part 37 presses and energizes the sealing part 41, whereby the fixed part in the outer peripheral part is broken so as to be peeled away. However, the shape of the pressing part is not limited thereto, and as a matter of course, a variety of shapes may be taken so long as the sealing part 41 is broken to enable the gas generating agent 43 to fall.

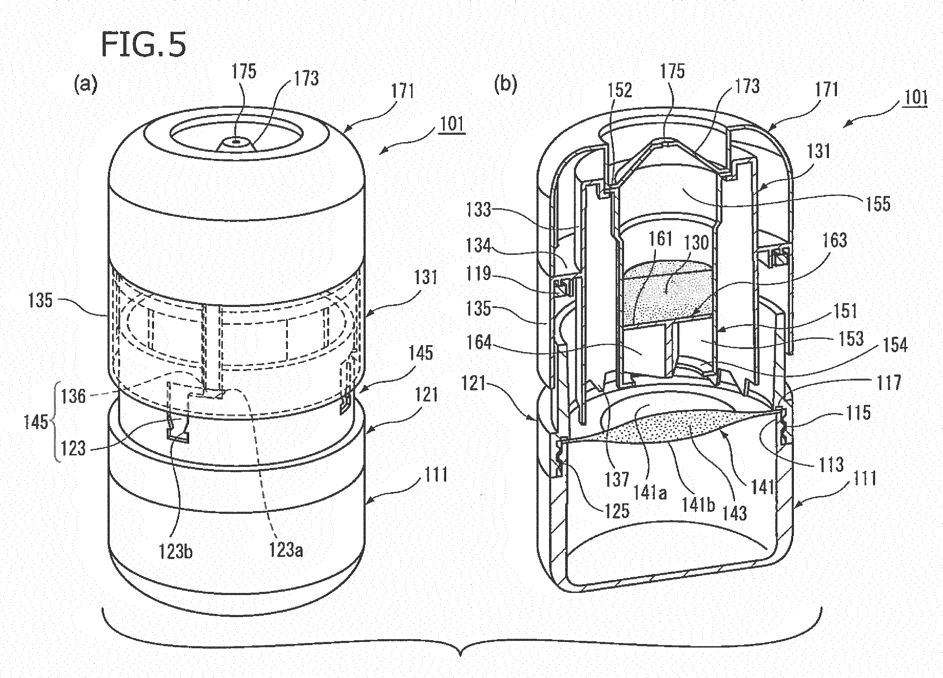

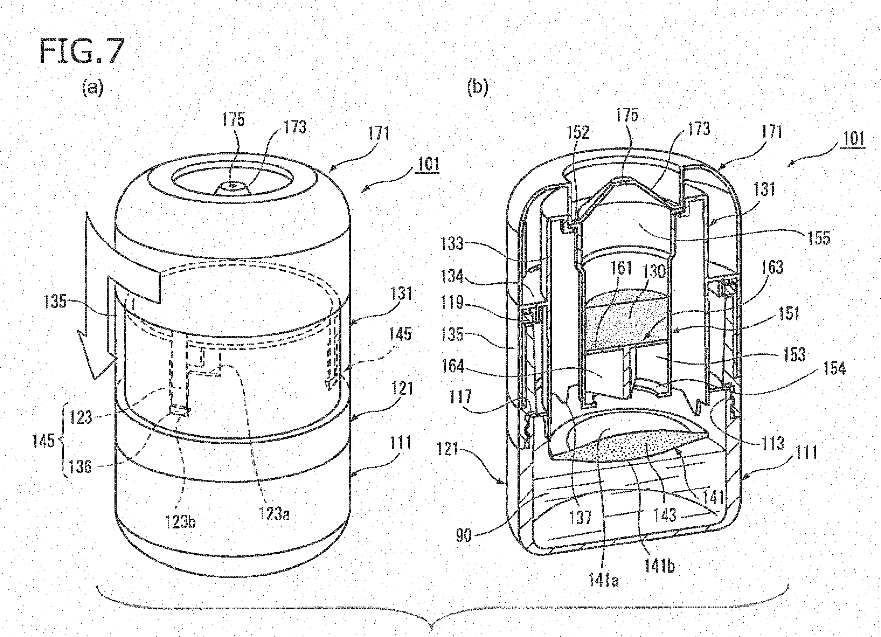

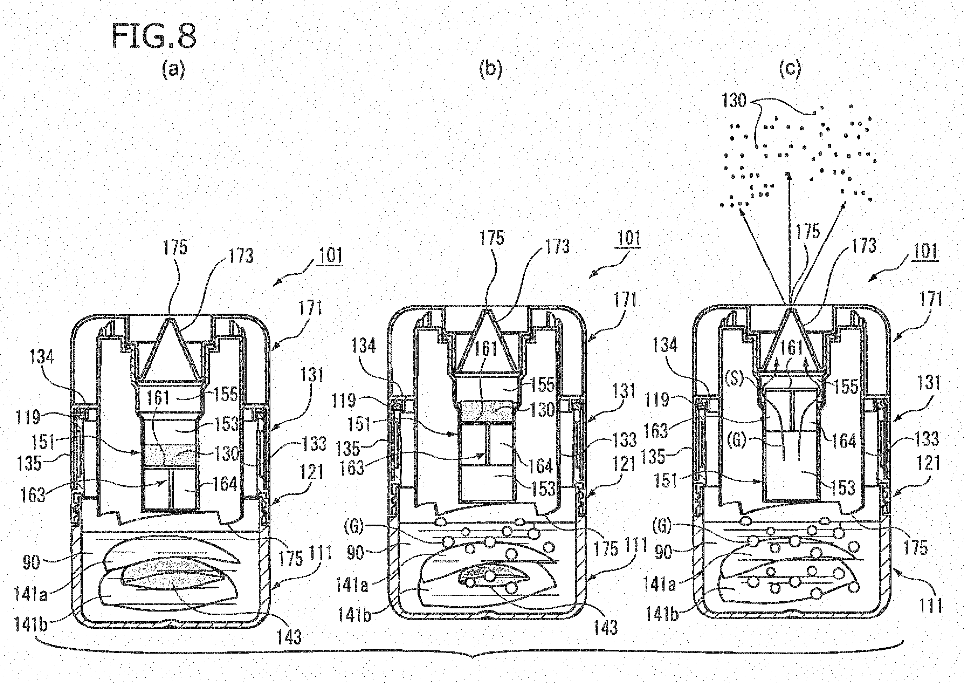

As shown in FIG. 5, a device 101 for spraying powdery chemical agent according to a second embodiment of the present invention includes a container body 111 for housing water (liquid) 90 (see FIGs. 7(a) and 4(b)) therein, the container body 111 having an upper end opening 113; a bag body 141 cladded onto the upper end opening 113 and having housed therein a gas generating agent 143 that reacts with the water 90 within the container body 111 to generate reactive gas; a cylindrical tubular guide member 121 to be installed in an upper part of the container body 111 by means of screwing; a tubular rupturing member 131 to be held by the tubular guide member 121 in a movable state toward the bag body 141 and provided with a tip blade 137 for breaking the bag body 141 to allow the gas generating agent 143 to fall in the water 90 within the container body 111; a cylinder part 151 to be disposed inward the tubular rupturing member 131, both open ends of which are able to communicate the interior and the exterior of the container body 111 with each other; a plunger 163 integrally molded with a piston 161 sliding airtightly against a lower side sliding inner peripheral wall 153 of the cylinder part 151 and also having an air space (S) (see FIG. 8(c)) relative to an upper side diameter-enlarged inner peripheral wall 155 of the cylinder part 151; and a powdery chemical agent 130 stored within the cylinder part 151.

In addition, the piston 161 and the plunger 163 may be combined as a separate body from each other, and by molding the piston 161 with an elastic member, such as rubber, etc., the hermetic sealing properties of the cylinder part 151 can be increased, or the pressure within the container body 111 when the piston 161 starts to move can be controlled.

The container body 111 of the second embodiment is a pressure resistant container having the upper end opening 113 and integrally molded with a resin, such as PET (polyethylene terephthalate), etc. The container body 111 may take a variety of shapes so long as it has a shape having the upper end opening 113 and capable of being stably placed on the floor face. In addition, so long as the container body 111 has prescribed pressure resistance to an increase of the internal pressure, it is not limited to a resin container, but a variety of containers, such as metal containers, ceramic containers, glass containers, etc., can be used.

The tubular guide member 121 is detachably installed in the upper end opening 113 in such a manner that a screw thread 125 provided on an inner peripheral surface of a lower end part thereof is screwed with a screw thread 115 provided on an outer peripheral surface of the upper end opening 113 of the container body 111.

The bag body 141 to be cladded onto the upper end opening 113 of the container body 111 is one in which the gas generating agent 143 is made to interpose between two sheets of circular sheets 141 a and 141b, and an outer peripheral part thereof is closely adhered by means of heat sealing or the like. Then, the bag body 141 is cladded onto the upper end opening 113 by sandwiching the outer peripheral part between an upper end part of the container body 111 and a lower end part of the tubular guide member 121. It is to be noted that a packing 117 is installed in the lower end part of the tubular guide member 121, and the outer peripheral part of the bag body 141 is tightly sandwiched.

The tubular rupturing member 131 has a main body part 133 formed in a cylindrical shape of a smaller diameter than the tubular guide member 121 and a guide wall 135 which is run from a tip of a flange part 134 drooped on an outer peripheral surface in an intermediate part of the main body part 133 to the lower end side. In a lower end part of the main body part 133, the annularly formed tip blade 137 opposing to an upper surface of the bag body 141 on the outer side in the radial direction than a lower side open end of the cylinder part 151 is projected. The guide wall 135 is outwardly fit onto an outer peripheral surface of the tubular guide member 121, and the tip blade 137 of the main body part 133 is held by the tubular guide member 121 in a movable state toward the bag body 141.

As shown in FIG. 5(a), plural lock mechanisms 145 obstructing the movement of the tubular rupturing member 131 held by the tubular guide member 121 toward the bag body 141 are provided between the tubular guide member 121 and the tubular rupturing member 131.

The lock mechanism 145 has an engagement groove 123 which extends from an upper part end to a lower end side on an outer peripheral surface of the tubular guide member 121 and is bent and formed in a crank shape; and an engagement projection 136 which is projected on an inner peripheral surface of the guide wall 135 in the tubular rupturing member 131 and engaged with the engagement groove 123. Then, in view of the fact that the engagement projection 136 comes into contact with a crank-shaped part 123a of the engagement groove 123, the tubular rupturing member 131 installed in the tubular guide member 121 while inserting the engagement projection 136 from an upper end part of the engagement groove 123 is held in such a state that the movement toward the bag body 141 by a pushing operation is obstructed.

Then, as shown by an arrow in FIG. 7(a), when the tip blade 137 of the tubular rupturing member 131 is moved toward the bag body 141, by rotating the tubular rupturing member 131 at a prescribed angle against the tubular guide member 121 to cancel the locked state of the engagement projection 136 coming into contact with the crank-shaped part 123a, the tubular rupturing member 131 becomes possible to undergo a pushing operation and becomes possible to move toward the bag body 141. It is to be noted that in the tubular rupturing member 131 in which the tip blade 137 has reached the breaking position of the bag body 141, the engagement projection 136 is locked by a locking part 123b provided in a lower end part of the engagement groove 123, whereby upward return to be caused due to the action of a gas pressure of reactive gas as described later is prevented from occurring.

That is, the lock mechanism 145 of the second embodiment prevents the movement of the tubular rupturing member 131 held by the tubular guide member 121 in a movable state toward the bag body 141 from occurring upon being carelessly pushed at the time of keeping the device 101 for spraying powdery chemical agent, or the like.

The cylinder part 151 of the second embodiment is a polypropylene-made stepped pipe having a different inner diameter from each other. The cylinder part 151 has an outside plunger 152 having an outer diameter larger than an upper part opening of the tubular rupturing member 131 and supported by an open edge in an upper end part thereof; and an inside plunger 154 having an inner diameter smaller than an outer diameter of the plunger 163 and supporting the plunger 163 in a lower end part thereof. Furthermore, the cylinder part 151 includes the lower side sliding inner peripheral wall 153 on which the piston 161 of the plunger 163 as housed slides airtightly and the upper side diameter-enlarged inner peripheral wall 155 defining the air space (S) relative to the piston 161.

The cylinder part 151 having the plunger 163 housed therein is inserted from an upper opening of the tubular rupturing member 131 and disposed inward the tubular rupturing member 131 such that both open ends thereof are able to communicate the interior and the exterior of the container body 111 with each other. That is, the main body part 133, the tubular guide member 121, and the guide wall 135 are concentrically disposed in this order on the outer peripheral side of the cylinder part 151.

It is to be noted that though the cylinder part 151 may be integrally molded with the tubular rupturing member 131, by forming the cylinder part 151 as a separate body from the tubular rupturing member 131 and combining them, sliding properties against the plunger 163 can be ensured while ensuring stiffness of the tubular rupturing member 131.

The plunger 163 includes a piston rod 164 whose cross-section perpendicular to an axis is cross-shaped; and the disk-shaped piston 161 provided in an upper end of the piston rod 164 and sliding airtightly on the lower side sliding inner peripheral wall 153. The piston rod 164 not only prevents an inclination of the piston 161 when the piston 161 slides along the lower side sliding inner peripheral wall 153 of the cylinder part 151 but also ensures a passage between the lower side sliding inner peripheral wall 153 and the plunger 163 when the piston 161 reaches the upper side diameter-enlarged inner peripheral wall 155 of the cylinder part 151.

The powdery chemical agent 130 is stored within the cylinder part 151 and placed on the piston 161 of the plunger 163 housed on the lower side. On the upper side open end side of the cylinder part 151, a cap 171 having a constriction shape such that it constricts toward a spray port 175 and provided with a spray nozzle 173 whose inner diameter becomes small step by step toward the spray port 175 from the upper side diameter-enlarged inner peripheral wall 155 is provided. The cap 171 is installed in such a manner that the spray nozzle 173 covers the upper side open end of the cylinder part 151 by locking a locking projection 178 on a locking hole 138 of the tubular rupturing member 131.

Furthermore, the spray port 175 is sealed by a sealing member 181. The sealing member 181 is a sealing member that seals the spray port 175 of the spray nozzle 173 and is formed of a resin sheet which is stuck to the spray nozzle 173 and peeled away at the time of use. It is to be noted that a sealing film which is rupturable by a gas pressure can also be used as the sealing member that seals the spray port 175 of the spray nozzle 173. As the sealing film, for example, a Parafilm (trade name: PARAFILM M, Model No.: PM996, manufactured by Pechiney Plastic Packaging, Inc.) can be used.

That is, by merely fitting the spray nozzle 173 of the cap 171 in the upper side open end of the cylinder part 151 positioning on the exterior side of the container body 111, the inside of the cylinder part 151 can be hermetically sealed.

The powdery chemical agent 130 is, for example, one in which a chemical agent, such as cyphenothrin (pyrethroid-based insecticide), dinotefuran that is a non-volatile insecticide, etc., is impregnated in or mixed with, for example, calcium silicate (trade name: FLUORITE RN, manufactured by Tokuyama Corporation) that is an inorganic powder. It is to be noted that as a matter of course, the chemical agent which is impregnated in or mixed with the powder is not limited to insecticides containing an insecticidal component as an active ingredient, but a variety of chemical agents, such as an aromatic, a deodorant, a disinfectant, etc., can be used. Furthermore, a variety of powders inclusive of inorganic powders, such as calcium silicate, silicic anhydride, etc., organic powders, such as a cellulose bead, a starch powder, etc., and the like, can be used as the powder for impregnating a chemical agent therein. In addition, a chemical agent that is a powder itself can also be used as the powdery chemical agent.

In the second embodiment, the liquid which is housed within the container body 111 is the water 90, and the gas generating agent 143 which is housed in the bag body 141 is sodium bicarbonate and citric acid. Thus, when the gas generating agent 143 is put into the water 90 within the container body 111, it reacts in the water 90 to generate a carbon dioxide gas (G) that is the reactive gas. It is to be noted that needless to say, the liquid or the gas generating agent 143 is not limited to the water 90 or sodium bicarbonate and citric acid, but a variety of liquids or gas generating agents can be used. However, the reactive gas generated by the gas generating agent is desirably one that is not only noninflammable but also innoxious against a human body or the like and does not generate high heat at the time of reaction, such as a carbon dioxide gas, etc.

Next, procedures of spraying and diffusing an insecticide using the device 101 for spraying powdery chemical agent of the above-described second embodiment are explained by reference to FIG. 7(a) to FIG. 8(c). For the purpose of spreading the insecticide to exterminate insect pests existing in the interior of a room, such as a cockroach, a tropical rat mite, etc., the device 101 for spraying powdery chemical agent is placed in the center of a floor of the room and used.

A prescribed amount of the water 90 is previously filled within the container body 111 of the device 101 for spraying powdery chemical agent. Since the water 90 is previously filled within the container body 111, the device 101 for spraying powdery chemical agent can be used as it is at a carrying destination. It is to be noted that a prescribed amount of the water 90 can also be poured later within the container body 111 from the upper end opening 113 of the container body 111 which has been opened by removing the tubular guide member 121 of the device 101 for spraying powdery chemical agent. As for the amount of the water 90 to be poured, the water 90 may be poured up to a scale provided in the container body 111 formed of a transparent or translucent resin, or a previously measured amount of the water 90 may also be poured. After pouring the water 90 within the container body 111, the tubular guide member 121 is screwed with the upper end opening 113, thereby hermetically sealing the inside of the container body 111.

In addition, a prescribed amount of a water absorptive polymer or aqueous gel having water held therein may also be previously housed within the container body 111.

The tubular rupturing member 131 in which the powdery chemical agent 130 is stored, and the cylinder part 151 having the plunger 163 inserted and set therein is installed is installed in the upper end opening 113 via the tubular guide member 121 in such a manner that the annular tip blade 137 projected in the lower end part of the main body part 133 is opposed to the upper surface of the bag body 141 on the outer side in the radial direction than the lower side open end of the cylinder part 151.

Subsequently, the sealing member 181 sealing the spray port 175 of the spray nozzle 173 is peeled away such that the upper side open end of the cylinder part 151 faces the exterior.

Then, as shown in FIG. 7(a), after rotating the tubular rupturing member 131 at a prescribed angle against the tubular guide member 121 to cancel the locked state of the engagement projection 136 coming into contact with the crank-shaped part 123a of the engagement groove 123, the tubular rupturing member 131 is subjected to a pushing operation to lock the engagement projection 136 on the locking part 123b. On this occasion, in view of the fact that the upper end part of the tubular guide member 121 comes into close contact with the packing 119 disposed on the lower surface side of the flange part 134 of the tubular rupturing member 131, the airtightness within the container body 111 is ensured.

As shown in FIG. 7(b), the tubular rupturing member 131 which has moved toward the bag body 141 upon receiving a pushing operating force undergoes break such that the tip blade 137 bores the bag body 141 into a disk shape.

Thus, an approximately whole amount of the gas generating agent 143 surely falls in the water 90 within the container body 111 together with the two circular sheets 141a and 141b of the bag body 141 as punched out in a disk shape.

Then, as shown in FIG. 8(B), the gas generating agent 143 composed of sodium bicarbonate and citric acid reacts in the water 90 to generate the carbon dioxide gas (G) that is the reactive gas. The carbon dioxide gas (G) generated within the container body 111 increases step by step, whereby the pressure within the container body 111 becomes high.

When the pressure of the carbon dioxide gas (G) within the container body 111 reaches a prescribed pressure or more, the piston 161 within the cylinder part 151 is pushed up. It is to be noted that by properly changing a sliding resistance of the piston 161 to the lower side sliding inner peripheral wall 153 by changing a fit tolerance between the cylinder part 151 and the piston 161, the materials, or the like, or the inner diameter of the cylinder part 151 and the outer diameter of the piston 161, the pressure within the container body 111 when the piston 161 starts to move can be controlled.

Then, as shown in FIG. 8(c), when the piston 161 reaches the upper side diameter-enlarged inner peripheral wall 155 due to the pressure within the container body 111 of the carbon dioxide gas (G) which has reached a prescribed value or more, the high-pressure carbon dioxide gas (G) within the container body 111 is released at once from the air space (S) between the upper side diameter-enlarged inner peripheral wall 155 and the piston 161, and the powdery chemical agent 130 is sprayed and diffused at once into the outside of the cylinder part 151 due to an air pressure of the high-pressure carbon dioxide gas (G) within the container body 111.

Since the spray nozzle 173 is provided in the upper side open end of the cylinder part 151, a flow velocity of the high-pressure gas which has been released at once from the air space (S) between the piston 161 and he upper side diameter-enlarged inner peripheral wall 155 is increased by the spray nozzle 173, and the powdery chemical agent 130 within the cylinder part 151 is more surely sprayed and diffused into the outside of the cylinder part 151.

In addition, by making the cross-section of the piston rod 164 cross-shaped, a sufficient amount of the high-pressure carbon dioxide gas (G) can go through toward the spray port 175 of the spray nozzle 173.

That is, the carbon dioxide gas (G) that sprays and diffuses the powdery chemical agent 130 is confined within the container body 111 until the gas pressure reaches a prescribed value or more, and the piston 161 reaches the upper side diameter-enlarged inner peripheral wall 155, and when the piston 161 reaches the upper side diameter-enlarged inner peripheral wall 155, the carbon dioxide gas (G) is released at once from the air space (S) relative to the upper side diameter-enlarged inner peripheral wall 155, whereby it is sprayed at once from the upper side of the cylinder part 151 (the spray port 175 of the spray nozzle 173). For that reason, in the device 101 for spraying powdery chemical agent, the high-pressure carbon dioxide gas (G) can be obtained without utilizing an explosive reaction accompanied with heat, or the like.

In consequence, in the device 101 for spraying powdery chemical agent of the second embodiment, it is not needed to fume a fumigant by heat of a heating element, or to heat and evaporate an insecticide as the chemical agent by using a foaming agent from which a medium other than the chemical agent is generated as in the conventional fumigation type or thermal evaporation type. As a result, the heat is not applied to the insecticidal component as the chemical agent impregnated in calcium silicate of the powdery chemical agent 130, so that chemical agents that are weak to heat can also be used.

In addition, it is not needed to dissolve an insecticidal component in a solvent or a liquefied gas as in the conventional aerosol type or pump type, so that insecticidal components that are low in solubility, or insecticidal components that are instable in a solution state can also be used. In addition, by using a gas that is low in reactivity, such as a carbon dioxide gas, etc., as a medium of the powdery chemical agent, decomposition of the powdery chemical agent or an adverse influence against furniture in a room is not generated, or pollution of the inside of a room, or the like is not generated.

According to the device 101 for spraying powdery chemical agent of the second embodiment as described above, the insecticide as the chemical agent can be sprayed and diffused without using a medium, such as a gas, a solvent, etc.

It is to be noted that the constituent members according to the device for spraying powdery chemical agent of the present invention, such as the container body, the bag body, the tubular guide member, the tubular rupturing member, the tip blade, the cylinder part, the piston, the lock mechanism, the spray nozzle, the powder, the active ingredient of the chemical agent, the powdery chemical agent, the liquid, the gas generating agent, etc., are not limited to the constitutions of the above-described second embodiment, and a variety of modes may be taken on the basis of the gist of the present invention.

The device 101 for spraying powdery chemical agent of the second embodiment as described above is constituted in such a manner that the tip blade 137 is formed annularly so as to be opposed to the upper surface of the bag body 141 on the outside of the radial direction from the lower side open end of the cylinder part 151. However, the shape of the tip blade is not limited thereto, and as a matter of course, a variety of shapes may be taken so long as the bag body 141 is broken to enable the gas generating agent 143 to fall.

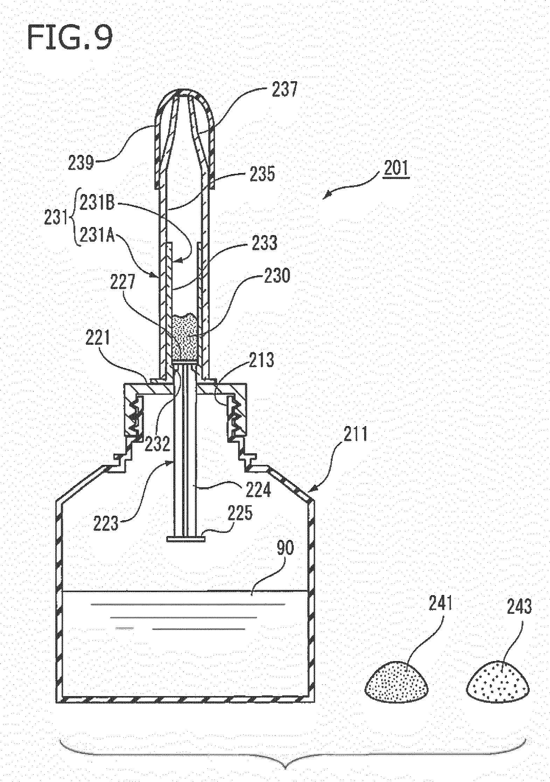

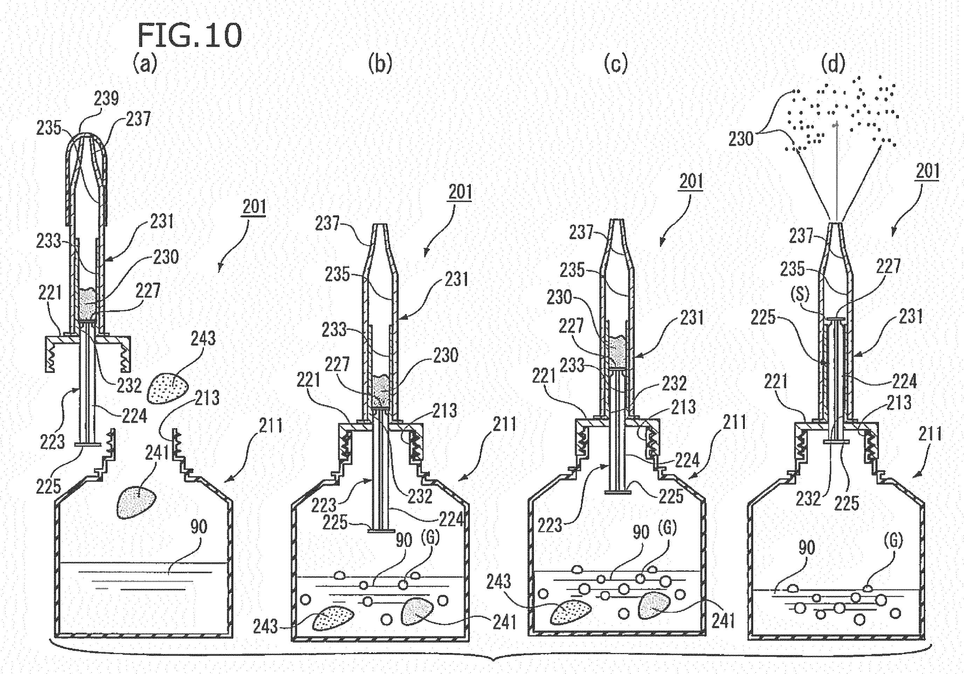

As shown in FIG. 9, a device 201 for spraying powdery chemical agent according to a third embodiment of the present invention includes a container body 211 for housing water (liquid) 90 therein, the container body 211 having an upper end opening 213; a cylinder 231 installed in a lid body 221 covering the upper end opening 213, both ends of which face an interior and an exterior of the container body 211; a powdery chemical agent 230 stored within the cylinder 231; a plunger 223 integrally molded with a piston 227 sliding airtightly against a lower side sliding inner peripheral wall 233 of the cylinder 231 having the powdery chemical agent 230 stored therein and having an air space (S) (see FIG. 10(d)) relative to an upper side diameter-enlarged inner peripheral wall 235 of the cylinder 231; and sodium bicarbonate 241 and citric acid 243 as a gas generating agent to be put into the container body 211, from which reactive gas is generated in the water 90 within the container body 211. In addition, the piston 227 and the plunger 223 may be combined as a separate body from each other, and by molding the piston 227 with an elastic member, such as rubber, etc., the hermetic sealing properties of the cylinder part 231 can be increased, or the pressure within the container body 211 when the piston 227 starts to move can be controlled.

The container body 211 of the third embodiment is a pressure resistant container having the upper end opening 213 and integrally molded with a resin, such as PET (polyethylene terephthalate), etc. The container body 211 may take a variety of shapes so long as it has a shape having the upper end opening 213 and capable of being stably placed on the floor face. In addition, so long as the container body 211 has prescribed pressure resistance to an increase of the internal pressure, it is not limited to a resin container, but a variety of containers, such as metal containers, ceramic containers, glass containers, etc., can be used.

The lid body 221 is a closed-end cylindrical cap covering the upper end opening 213 upon being screwed with a screw thread provided on the outer peripheral surface of the upper end opening 213 of the container body 211, and the plunger 223 penetrates through an opening of the bottom center.

The cylinder 231 of the third embodiment is a pipe in which a cylinder 213B of a polypropylene-made syringe, a tip of which is cut, is internally fitted on the base end side of a polypropylene-made chip 231A for pipette, and the tip end side of the chip 231A for pipette forma a spray nozzle 237 having a constriction shape such that it constricts toward an upper side open end, and its inner diameter becomes small step by step from the upper side diameter-enlarged inner peripheral wall 235 toward the upper side open end. In view of the fact that the lid body 221 to which the base end side of each of the chip 231A for pipette and the cylinder 231 B constituting the cylinder 231 is fixed is installed in the upper end opening 213 of the container body 211, the both open ends of the cylinder 231 are disposed so as to face an interior and an exterior of the container body 211, respectively.

That is, the cylinder 231 includes the lower side sliding inner peripheral wall 233 (corresponding to an inner wall of the cylinder 231 B) on which the piston 227 slides airtightly; the upper side diameter-enlarged inner peripheral wall 235 (corresponding to an inner wall of the chip 231A for pipette) having an inner diameter larger than an outer diameter of the piston 227 and forming the air space (S) relative to the piston 227; and a lower end diameter-reduced inner wall 232 (corresponding to a lower end inner wall of the cylinder 231 B) having an inner diameter smaller than an outer diameter of the piston 227 in a lower part of the lower side sliding inner peripheral wall 233, thereby obstructing falling of the piston 227 from the lower side open end.

Furthermore, by providing a convex in an outer periphery-side bottom of the piston 227, the piston 227 becomes hard to be again engaged with the lower side sliding inner peripheral wall 233, whereby the air space (S) can be ensured largely.

The plunger 223 is a plunger of a polypropylene-made syringe. The plunger 223 includes a piston rod 224 whose cross-section perpendicular to an axis is cross-shaped; the disk-shaped piston 227 provided in an upper end of the piston rod 224 and sliding airtightly on the lower side sliding inner peripheral wall 233; and a rod end 225 provided in a lower end of the piston rod 224. The piston rod 224 not only prevents an inclination of the piston 227 when the piston 227 slides along the lower side sliding inner peripheral wall 233 of the cylinder 231 but also ensures a passage between the lower side sliding inner peripheral wall 233 and the plunger 223 when the piston 227 reaches the upper side diameter-enlarged inner peripheral wall 235 of the cylinder 231. The rod end 225 has an outer diameter larger than an inner diameter of the lower side sliding inner peripheral wall 233 and obstructs the movement of the piston 227 to the spray nozzle 237 when the piston 227 reaches the upper side diameter-enlarged inner peripheral wall 235. Furthermore, by providing a convex in an outer periphery-side top surface part of the rod end 225, the rod end 225 does not cover an opening of the bottom center of the lid body 221, whereby a passage of the high-pressure carbon dioxide gas (G) can be ensured largely.

The powdery chemical agent 230 is stored within the cylinder 231, the piston 227 of the plunger 223 is installed in the lower side open end, and a cap 239 is fixed in an upper side open end thereof and sealed. The cap 239 is a sealing member that seals the upper side open end of the cylinder 231 and is formed of a resin material having flexibility, such as silicone, etc. It is to be noted that as the sealing member that seals the upper side open end of the cylinder 231, a rubber stopper or a variety of sealing films can also be used. As the sealing film, for example, a Parafilm (trade name: PARAFILM M, Model No.: PM996, manufactured by Pechiney Plastic Packaging, Inc.) can be used.

The cap 239 that seals the upper side open end of the cylinder 231 positioning on the exterior side of the container body 211 is formed of a resin material having flexibility, such as silicone, etc., and by merely fitting on the upper side open end, the inside of the cylinder 231 can be hermetically sealed.

The powdery chemical agent 230 is, for example, one in which a chemical agent, such as cyphenothrin (pyrethroid-based insecticide), dinotefuran that is a non-volatile insecticide, etc., is impregnated in or mixed with, for example, calcium silicate (trade name: FLUORITE RN, manufactured by Tokuyama Corporation) that is an inorganic powder. It is to be noted that as a matter of course, the chemical agent which is impregnated in or mixed with the powder is not limited to insecticides containing an insecticidal component as an active ingredient, but a variety of chemical agents, such as an aromatic, a deodorant, a disinfectant, etc., can be used. Furthermore, a variety of powders inclusive of inorganic powders, such as calcium silicate, silicic anhydride, etc., organic powders, such as a cellulose bead, a starch powder, etc., and the like, can be used as the powder for impregnating a chemical agent therein. In addition, a chemical agent that is a powder itself can also be used as the powdery chemical agent.

In the third embodiment, the liquid which is housed within the container body 211 is the water 90, and the gas generating agent is the sodium bicarbonate 241 and the citric acid 243, respectively. Thus, when the lid body 221 is opened, the water 90 is poured into the container body 211 from the upper end opening 213, and then, the sodium bicarbonate 241 and the citric acid 243 are put thereinto, they react in the water 90 to generate the carbon dioxide gas (G) that is the reactive gas. It is to be noted that needless to say, the liquid or the gas generating agent is not limited to the water 90 or the sodium bicarbonate 241 and the citric acid 243, but a variety of liquids or gas generating agents can be used. However, the reactive gas generated by the gas generating agent is desirably one that is not only noninflammable but also innoxious against a human body or the like and does not generate high heat at the time of reaction, such as a carbon dioxide gas, etc.

Next, procedures of a process for spraying powdery chemical agent of spraying and diffusing an insecticide using the device 201 for spraying powdery chemical agent of the above-described third embodiment are explained by reference to FIGs. 10(a) to 10(d). For the purpose of spreading the insecticide to exterminate insect pests existing in the interior of a room, such as a cockroach, a tropical rat mite, etc., the device 201 for spraying powdery chemical agent is placed in the center of a floor of the room and used.

First of all, as shown in FIG. 10(a), the lid body 221 of the device 201 for spraying powdery chemical agent is opened, and a prescribed amount of the water 90 is poured into the container body 211 from the upper end opening 213. As for the amount of the water 90 to be poured, the water 90 may be poured up to a scale provided in the container body 211 formed of a transparent or translucent resin, or a previously measured amount of the water 90 may also be poured.

In addition, a prescribed amount of a water absorptive polymer or aqueous gel having water held therein may also be previously housed within the container body 211.

Subsequently, after putting the sodium bicarbonate 241 and the citric acid 243 into the container body 211, the lid body 221 is screwed with the upper end opening 213, thereby hermetically sealing the inside of the container body 211. On this occasion, the lid body 221 installed with the cylinder 231 in which the powdery chemical agent 230 is stored, and the plunger 223 is inserted and set therein is installed in such a manner that not only the lower end open end of the cylinder 231 faces an interior of the container body 211, but also the upper side open end of the cylinder 231 from which the cap 239 has been removed faces an exterior thereof.

Then, as shown in FIG. 10(b), the sodium bicarbonate 241 and the citric acid 243 react in the water 90 to generate the carbon dioxide gas (G) that is reactive gas. The carbon dioxide gas (G) generated within the container body 211 increases step by step, whereby the pressure within the container body 211 becomes high.

As shown in FIG. 10(c), when the pressure of the carbon dioxide gas (G) within the container body 211 reaches a prescribed value or more, for example, so long as a cylinder having an inner diameter of 9.5 mm is concerned, when the pressure reaches 30 to 40 kPa, the piston 227 within the cylinder 231 is pushed up. It is to be noted that by properly changing a sliding resistance of the piston 227 to the lower side sliding inner peripheral wall 233 by changing a fit tolerance between the cylinder part 231 and the piston 227, the materials, or the like, or the inner diameter of the cylinder part 231 and the outer diameter of the piston 227, the pressure within the container body 211 when the piston 227 starts to move can be controlled.

Then, as shown in FIG. 10(d), when the piston 227 reaches the upper side diameter-enlarged inner peripheral wall 235 due to the pressure of the carbon dioxide gas (S) within the container body 211 which has reached a prescribed value or more, the high-pressure carbon dioxide gas (G) within the container body 211 is released at once from the air space (S) between the upper side diameter-enlarged inner peripheral wall 235 and the piston 227, and the powdery chemical agent 230 is sprayed and diffused at once into the outside of the cylinder 231 due to an air pressure of the high-pressure carbon dioxide gas (G) within the container body 211.

Since the spray nozzle 237 is provided in the upper side open end of the cylinder 231, a flow velocity of the high-pressure gas which has been released at once from the air space (S) between the piston 227 and the upper side diameter-enlarged inner peripheral wall 235 is increased by the spray nozzle 237, and the powdery chemical agent 230 within the cylinder 231 is more surely sprayed and diffused into the outside of the cylinder 231.

In addition, by making the cross-section of the piston rod 224 cross-shaped, a sufficient amount of the high-pressure carbon dioxide gas (G) can go through toward the spray nozzle 237. Furthermore, in view of the fact that the rod end 225 provided in the lower end of the piston rod 224 comes into contact with the inner surface of the lid body 221, the movement of the piston 227 to the side of the spray nozzle 237 is obstructed, and therefore, the matter that the piston 227 which has been pushed up within the cylinder 231 due to the air pressure of the high-pressure carbon dioxide gas (G) covers the spray nozzle 237 can be prevented from occurring.

That is, the carbon dioxide gas (G) that sprays and diffuses the powdery chemical agent 230 is confined within the container body 211 until the gas pressure reaches a prescribed value or more, and the piston 227 reaches the upper side diameter-enlarged inner peripheral wall 235, and when the piston 227 reaches the upper side diameter-enlarged inner peripheral wall 235, the carbon dioxide gas (G) is released at once from the air space (S) relative to the upper side diameter-enlarged inner peripheral wall 235, whereby it is sprayed at once from the upper side open end of the cylinder 231 (the spray port of the spray nozzle 237). For that reason, in the device 201 for spraying powdery chemical agent, the high-pressure carbon dioxide gas (G) can be obtained without utilizing an explosive reaction accompanied with heat, or the like.

In consequence, in the device 201 for spraying powdery chemical agent of the third embodiment, it is not needed to fume a fumigant by heat of a heating element, or to heat and evaporate an insecticide as the chemical agent by using a hydration exothermic agent from which a medium other than the chemical agent is generated as in the conventional fumigation type or thermal evaporation type. As a result, the heat is not applied to the insecticidal component as the chemical agent impregnated in calcium silicate of the powdery chemical agent 230, so that insecticidal components that are weak to heat can also be used. In addition, it is not needed to dissolve an insecticidal component in a solvent or a liquefied gas as in the conventional aerosol type or pump type, so that insecticidal components that are low in solubility, or insecticidal components that are instable in a solution state can also be used. In addition, by using an inert gas, such as a carbon dioxide gas, etc., as a medium of the powdery chemical agent, decomposition of the powdery chemical agent or an adverse influence against furniture in a room is not generated, or pollution of the inside of a room, or the like is not generated.

According to the device 201 for spraying powdery chemical agent and the process for spraying powdery chemical agent of the third embodiment as described above, the insecticide as the chemical agent can be diffused without using a medium, such as a gas, a solvent, etc.

It is to be noted that the constituent members according to the device for spraying powdery chemical agent of the present invention, such as the container body, the lid body, the cylinder, the piston, the spray nozzle, the powder, the active ingredient of the chemical agent, the chemical agent-impregnated powder, the liquid, the gas generating agent, etc., are not limited to the constitutions of the above-described third embodiment, and a variety of modes may be taken on the basis of the gist of the present invention.

In the device 201 for spraying powdery chemical agent of the third embodiment as described above, the upper part open end of the cylinder 231 provided with the spray nozzle 237 is made upward in the vertical direction, and the lower part open end of the cylinder 231 installed with the plunger 223 is made downward in the vertical direction. However, as a matter of course, as for the directions of the both open ends of the cylinder 231, a variety of directions, such as an obliquely upward direction, a horizontal direction, etc., may be taken.

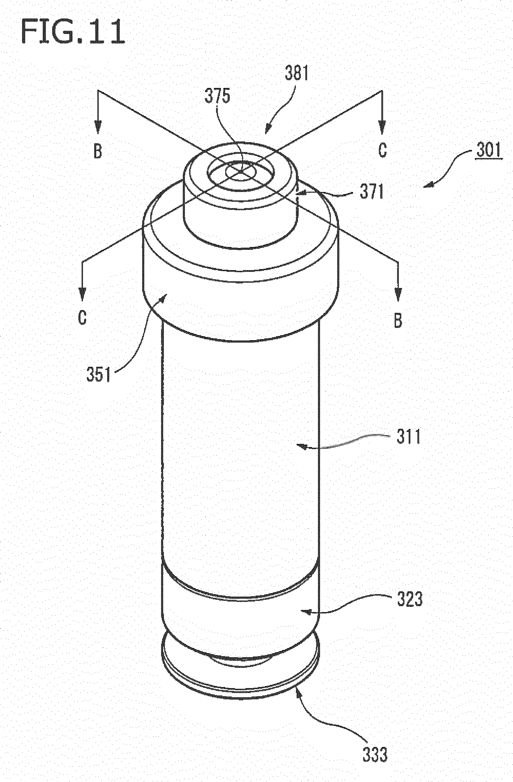

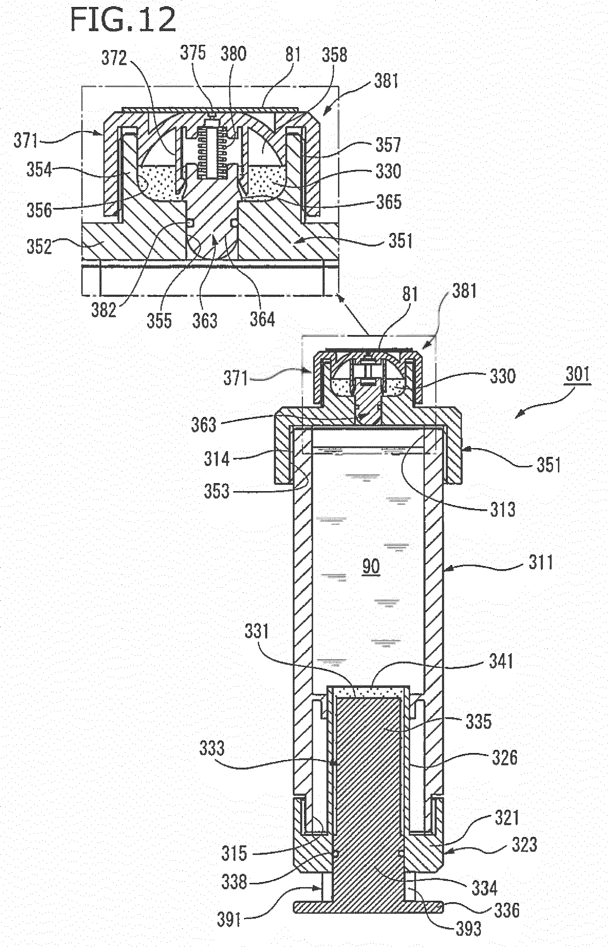

As shown in FIGs. 11 to 13, a device 301 for spraying powdery chemical agent according to a fourth embodiment of the present invention includes a container body 311 for housing water (liquid) 90 therein; first cap 381 to be installed in an upper end opening (first opening) 313 of the container body 311; a piston 363 to be installed in a cylinder part 354 of the first cap 381; a powdery chemical agent 330 to be stored in a housing chamber 358 of the first cap 381; a second cap 323 to be installed in a lower end opening (second opening) 315 of the container body 311; a gas generating agent 343 that reacts with the water 90 within the container body 311 to generate reactive gas, the gas generating agent 343 being housed in a tubular part 326 of the second cap 323; and a rupturing member 333 which is held by the second cap 323 in a movable state toward a sealing part 341 and in which a pressing part 331 for rupturing the sealing part 341 to incorporate the gas generating agent 343 into the water 90 within the container body 311 is provided in a tip part thereof.

The container body 311 of the fourth embodiment is a pressure resistant container having the upper end opening 313 and the lower end opening 315 and integrally molded with a resin, such as PET (polyethylene terephthalate), etc. So long as the container body 311 has prescribed pressure resistance to an increase of the internal pressure, it is not limited to a resin container, but a variety of containers, such as metal containers, ceramic containers, glass containers, etc., can be used.

The first cap 381 of the fourth embodiment includes a lid part 352 covering the upper end opening 313; a cap main body 351 having the cylinder part 354 formed penetrating into the lid part 352, both ends thereof facing an interior and an exterior of the container body 311; and a cap 371 that covers an upper part opening of the cap main body 351 to define a housing chamber 358.

In the lid part 352, a screw thread 353 is screwed with a screw thread 314 provided on the outer peripheral surface of the upper end opening 313 of the container body 311, and the lid part 352 is detachably installed in the upper end opening 313. A screw thread 357 with which the cap 371 is screwed is provided in an upper end part of the cylinder part 354.

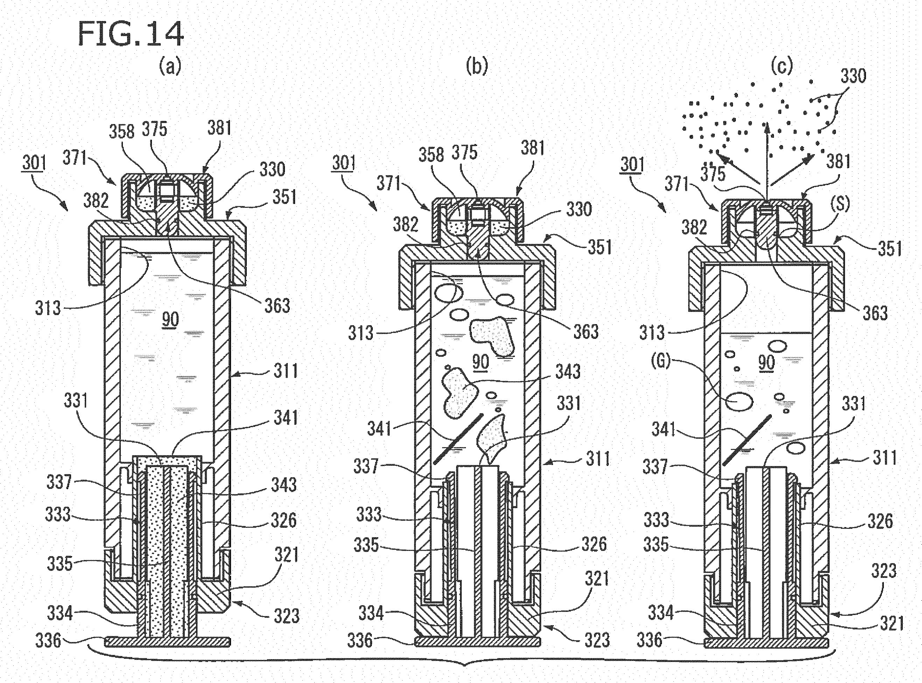

Furthermore, the cylinder part 354 of the cap main body 351 communicates the interior and the exterior of the container body 311 with each other via the cap 371 and includes a sliding inner peripheral wall 355 on which the housed piston 363 slides airtightly and a diameter-enlarged inner peripheral wall 356 defining an air space (S) (see FIG. 14(c)) relative to the piston 363.

A spray nozzle 375 is formed in the cap 371 to be cladded on an upper end opening of the cylinder part 354. It is to be noted that the spray nozzle 375 is sealed by a sealing member 81.

Furthermore, a plurality of flexible locking arms 372 for locking the piston 363 which has moved to the side of the diameter-enlarged inner peripheral wall 356 is provided on the inner wall surface of the cap 371.

The piston 363 of the fourth embodiment not only slides in such a manner that an O-ring 382 installed in an outer peripheral part on the side of the cap main body 351 in a columnar piston body 364 is made airtight against the sliding inner peripheral wall 355 of the cylinder part 354 but also defines the air space (S) relative to the diameter-enlarged inner peripheral wall 356 of the cylinder part 354.

In addition, the piston 363 is pressed and energized to the side of the container body 311 by a compressed coil spring (elasticity energizing member) 380 inserted between the piston 363 and the cap 371. This compressed coil spring 380 is one for giving a prescribed resistance force to the piston 363 moving from the sliding inner peripheral wall 355 to the diameter-enlarged inner peripheral wall 356. It is to be noted that a locking projection 365 which is inserted in the sliding inner peripheral wall 355 to regulate the movement of the piston 363 which has been pressed and energized by the compressed coil spring 380 to the side of the container body 311 is projected in the outer peripheral part on the side of the cap 371 in the piston body 364.

The powdery chemical agent 330 which is stored in the housing chamber 358 of the first cap 381 is, for example, one in which a chemical agent, such as cyphenothrin (pyrethroid-based insecticide), dinotefuran that is a non-volatile insecticide, etc., is impregnated in or mixed with, for example, calcium silicate (trade name: FLUORITE RN, manufactured by Tokuyama Corporation) that is an inorganic powder. It is to be noted that as a matter of course, the chemical agent which is impregnated in or mixed with the powder is not limited to insecticides containing an insecticidal component as an active ingredient, but a variety of chemical agents, such as an aromatic, a deodorant, a disinfectant, etc., can be used. Furthermore, a variety of powders inclusive of inorganic powders, such as calcium silicate, silicic anhydride, etc., organic powders, such as a cellulose bead, a starch powder, etc., and the like, can be used as the powder for impregnating a chemical agent therein. In addition, a chemical agent that is a powder itself can also be used as the powdery chemical agent.

The second cap 323 of the fourth embodiment has a lid part 321 covering the lower end opening 315 of the container body 311; the tubular part 326 formed penetrating into the lid part 321, both ends thereof facing an interior and an exterior of the container body 311; and the sealing part 341 extending inward the container body 311 and sealing an interior side opening of the tubular part 326.

The sealing part 341 is, for example, one in which an outer peripheral part of a circular sheet is fixed to the interior side opening of the tubular part 326 by means of heat sealing, an adhesive, or the like. Though the sealing part 341 has a sufficient fixing force for supporting the weight of the water 90 housed within the container body 311, it is constituted in such a manner that when a pressing force of a prescribed value or more is given by the pressing part 331 of the rupturing member 333, the fixed part in the outer peripheral part is broken and peeled away.

The rupturing member 333 of the fourth embodiment includes a rod part 335 whose cross-section perpendicular to an axis is cross-shaped; a cylindrical piston part 334 provided on the base end side of the rod part 335 and sliding airtightly against the tubular part 326 via an O-ring 338; a rod end 336 provided on a base end of the rod part 335; the pressing part 331 provided in a tip of the rod part 335; and four flexible locking arms 337 extending along the rod part 335 from the piston part 334.

Then, the rupturing member 333 is held by the tubular part 326 in such a state that the pressing part 331 is movable toward the sealing part 341. The rod part 335 defines a housing air space for housing the gas generating agent 343 relative to the tubular part 326.

It is to be noted that a stopper member 391 for obstructing the matter that the rupturing member 333 held by the tubular part 326 carelessly moves toward the sealing part 341 is detachably provided between the lid part 321 of the second cap 323 and the rod end 336 of the rupturing member 333.

The stopper member 391 includes a gripping part 393 having a C-shaped cross-section to be installed in the piston part 334 and a clipping part 392 acting an operating part on the occasion of removing the gripping part 393.

In the fourth embodiment, the liquid to be housed within the container body 311 is the water 90, and the gas generating agent 343 to be housed in the tubular part 326 of the second cap 323 is sodium bicarbonate and citric acid. Thus, when the gas generating agent 343 is incorporated into the water 90 within the container body 311, it reacts in the water 90 to generate the carbon dioxide gas (G) that is the reactive gas. It is to be noted that needless to say, the liquid or the gas generating agent is not limited to the water 90 or sodium bicarbonate and citric acid, but a variety of liquids or gas generating agents can be used. However, the reactive gas generated by the gas generating agent is desirably one that is not only noninflammable but also innoxious against a human body or the like and does not generate high heat at the time of reaction, such as a carbon dioxide gas, etc.

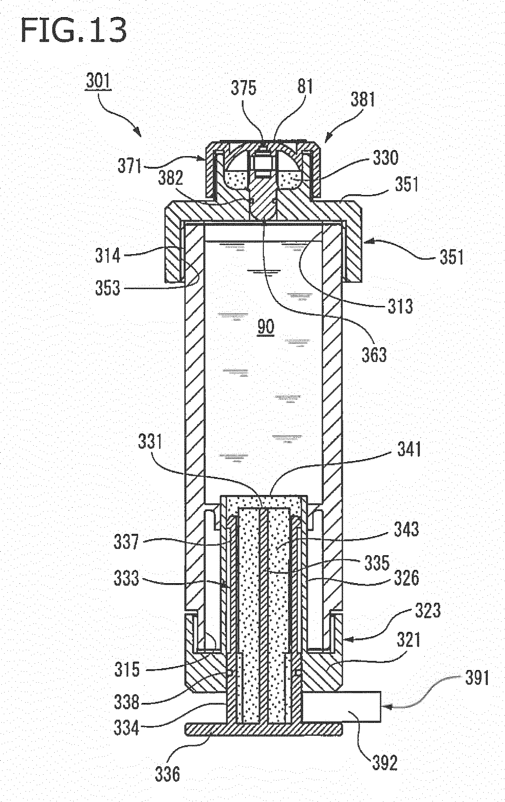

Next, procedures of a process for spraying powdery chemical agent of spraying and diffusing an insecticide using the device 301 for spraying powdery chemical agent of the above-described fourth embodiment are explained by reference to FIG. 13 and FIGs. 14(a) to 14(c). For the purpose of spreading the insecticide to exterminate insect pests existing in the interior of a room, such as a cockroach, a tropical rat mite, etc., or spreading a disinfectant, an aromatic, a deodorant, or the like in the whole of a room, the device 301 for spraying powdery chemical agent is placed in the center of a floor of the room and used.

As shown in FIG. 13, a prescribed amount of the water 90 is previously filled within the container body 311 of the device 301 for spraying powdery chemical agent. Since the water 90 is previously filled within the container body 311, the device 301 for spraying powdery chemical agent can be used as it is at a carrying destination. It is to be noted that a prescribed amount of the water 90 can also be poured later within the container body 311 from the upper end opening 313 of the container body 311 which has been opened by removing the first cap 381 of the device 301 for spraying powdery chemical agent. As for the amount of the water 90 to be poured, the water 90 may be poured up to a scale provided in the container body 311 formed of a transparent or translucent resin, or a previously measured amount of the water 90 may also be poured. After pouring the water 90 within the container body 311, the first cap 381 is screwed with the upper end opening 313, thereby hermetically sealing the inside of the container body 311.

In addition, a prescribed amount of a water absorptive polymer or aqueous gel having water held therein may also be previously housed within the container body 311.

Subsequently, as shown in FIG. 14(a), the sealing member 81 that seals the spray nozzle 375 is peeled away, and the stopper member 391 provided between the lid part 321 of the second cap 323 and the rod end 336 of the rupturing member 333 is removed.

Then, the container body 311 is subjected to a pushing operation downward in such a state that the rod end 336 is put on the floor.

As shown in FIG. 14(b), the rupturing member 333 which has moved toward the sealing part 341 upon receiving a pushing operating force undergoes break such that the pressing part 331 removes the fixed part in the outer peripheral part of the sealing part 341. Then, the locking part of the flexible locking arm 337 is locked by an interior side open end of the tubular part 326.

Thus, the gas generating agent 343 housed in the tubular par 326 is incorporated in the water 90 within the container body 311.

Then, the gas generating agent 343 composed of sodium bicarbonate and citric acid reacts in the water 90 to generate the carbon dioxide gas (G) that is the reactive gas. The carbon dioxide gas (G) generated within the container body 311 increases step by step, whereby the pressure within the container body 311 becomes high. On this occasion, though a pushing-down force acts on the rupturing member 333 due to a pressure within the container body 311, the locking part of the flexible locking arm 311 is locked by the interior side open end of the tubular part 326, and therefore, the rupturing member 333 is not pushed down.

When the pressure of the carbon dioxide gas (G) within the container body 311 reaches a prescribed pressure or more, the piston 363 within the cylinder part 354 is pushed up resisting a pressing energizing force of the compressed coil spring 380 and moved to the diameter-enlarged inner peripheral wall 356 from the sliding inner peripheral wall 355. On this occasion, the O-ring 382 is installed in the outer peripheral part of the piston body 364, and the airtightness relative to the sliding inner peripheral wall 355 is ensured, and therefore, the pressure of the carbon dioxide gas (G) effectively acts on the piston 363 without causing leakage.

It is to be noted that by properly changing a repulsive force of the compressed coil spring 380, the prescribed pressure within the container body 311 for moving the piston 363 within the cylinder part 354 to the diameter-enlarged inner peripheral wall 356 can be easily controlled.

Then, when the O-ring 382 in the piston 363 reaches the diameter-enlarged inner peripheral wall 356 by means of the pressure of the carbon dioxide gas (G) within the container body 311 which has reached a prescribed value or more, the high-pressure carbon dioxide gas (G) within the container body 311 is released at once from the air space (S) between the diameter-enlarged inner peripheral wall 356 and the piston body 364, whereby the powdery chemical agent 330 within the housing chamber 358 is sprayed and diffused at once into the outside of the cylinder part 354 due to the air pressure of the high-pressure carbon dioxide gas (G) within the container body 311. On this occasion, in view of the fact that the locking projection 365 is locked by the flexible locking arm 372 of the cap 371, the piston 363 is held within the diameter-enlarged inner peripheral wall 356.

Since the cap 371 in which the spray nozzle 375 is formed is cladded in the upper end opening of the cylinder part 354, a flow velocity of the high-pressure gas which has been released at once from the air space (S) between the piston 363 and the diameter-enlarged inner peripheral wall 356 is increased by the spray nozzle 375, and the powdery chemical agent 330 within the housing chamber 358 is more surely sprayed and diffused into the outside of the cylinder part 354.

That is, the carbon dioxide gas (G) that sprays and diffuses the powdery chemical agent 330 is confined within the container body 311 until the gas pressure reaches a prescribed value or more, and the O-ring 382 of the piston 363 reaches the diameter-enlarged inner peripheral wall 356, and when the O-ring 382 of the piston 363 reaches the diameter-enlarged inner peripheral wall 356, the carbon dioxide gas (G) is released at once from the air space (S) relative to the diameter-enlarged inner peripheral wall 356, whereby it is sprayed at once from the upper side of the cylinder part 354 (the spray nozzle 375 of the cap 371). For that reason, in device 301 for spraying powdery chemical agent, the high-pressure carbon dioxide gas (G) can be obtained without utilizing an explosive reaction accompanied with heat, or the like.

In consequence, in the device 301 for spraying powdery chemical agent of the fourth embodiment, it is not needed to fume a fumigant by heat of a heating element, or to heat and evaporate an insecticide as the chemical agent by using a foaming agent from which a medium other than the chemical agent is generated as in the conventional fumigation type or thermal evaporation type. As a result, the heat is not applied to the insecticidal component as the chemical agent impregnated in calcium silicate of the powdery chemical agent 330, so that insecticidal components that are weak to heat can also be used. In addition, it is not needed to dissolve an insecticidal component in a solvent or a liquefied gas as in the conventional aerosol type or pump type, so that insecticidal components that are low in solubility, or insecticidal components that are instable in a solution state can also be used. In addition, by using a gas that is low in reactivity, such as a carbon dioxide gas, etc., as a medium of the powdery chemical agent, decomposition of the powdery chemical agent or an adverse influence against furniture in a room is not generated, or pollution of the inside of a room, or the like is not generated.

According to the device 301 for spraying powdery chemical agent of the fourth embodiment as described above, the insecticide as the chemical agent can be sprayed and diffused without using a medium, such as a gas, a solvent, etc.

It is to be noted that the constituent members according to the device for spraying powdery chemical agent of the present invention, such as the lid part covering the first opening, the cylinder part, the first cap, the piston, the lid part covering the second opening, the tubular part, the sealing part, the second cap, the rupturing member, the pressing part, the spray nozzle, the powder, the active ingredient of the chemical agent, the powdery chemical agent, the liquid, the gas generating agent, etc., are not limited to the constitutions of the above-described fourth embodiment, and a variety of modes may be taken on the basis of the gist of the present invention.

In the device 301 for spraying powdery chemical agent of the fourth embodiment as described above, it has been constituted such that the pressing part 331 presses and energizes the sealing part 341 to undergo break so as to peel away the fixed part in the outer peripheral part. However, as a matter of course, the shape of the pressing part is not limited thereto, but a variety of shapes may be taken so long as the gas generating agent 343 can be incorporated in the water 90 upon rupturing the sealing part 341.

### EXAMPLES

The present invention is hereunder specifically explained with reference to Examples. However, it should not be construed that the present invention is limited only to these Examples.

### (Example 1)

First of all, in order to confirm a spraying effect of the device 201 for spraying powdery chemical agent according to the third embodiment of the present invention, a measuring test of falling amount of chemical agent of d.d-T-cyphenothrin (trade name: GOKILAHT S, manufactured by Sumitomo Chemical Co., Ltd.) using the device 201 for spraying powdery chemical agent was conducted. Contents of the test are shown as follows.

### [Measuring test of falling amount of chemical agent]

### (Test method)

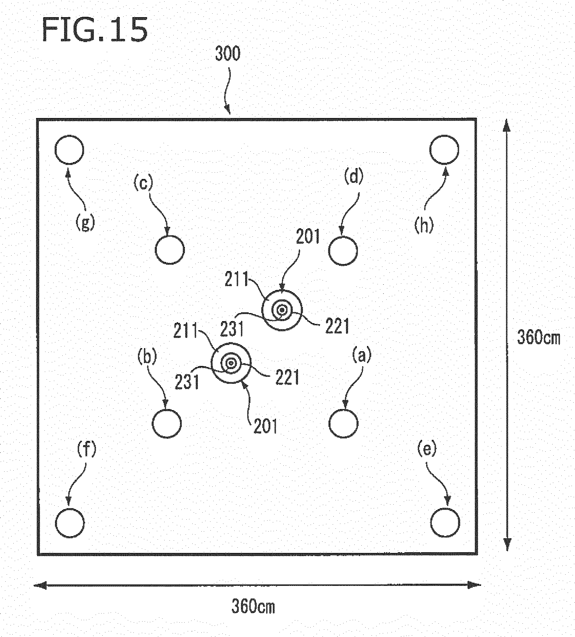

1. An interior of a room having a floor area of 13 m2 (360 cm in length x 360 cm in width) as shown in FIG. 15 was made as a test plot. Two of the device 201 for spraying powdery chemical agent having the constitution shown in FIG. 9 are arranged and placed in a diagonal line in the center of a test plot floor face 300; and metal-made Petri dishes (a) to (h) are placed at a plurality of positions at intervals of 1 m and 2 m, respectively far from the device 201 for spraying powdery chemical agent, respectively toward the four corners.
2. The powdery chemical agent 230 is sprayed by using three kinds of devices (A) to (C) for spraying powdery chemical agent, and after one hour, the Petri dishes (a) to (h) are recovered. It is to be noted that for the purposes of excluding any influence by a flow of an air stream in the room and evaluating a diffusion effect of the powdery chemical agent 230 by the device 201 for spraying powdery chemical agent, the test was carried out under a non-ventilation condition until recovery of the Petri dish.
3. The amount of d.d-T-cyphenothrin as the powdery chemical agent 230 is analyzed from the inside of each of the recovered Petri dishes (a) to (h).
4. A spreading amount of d.d-T-cyphenothrin per unit area and a falling rate relative to the spreading amount are calculated on the base of the analysis results.

Results of the analysis and calculation by the above-described measuring test of falling amount of chemical agent are shown in the following Tables 1 to 3.

### (Test conditions)

### 1. Device for spraying powdery chemical agent

### • Device (A) for spraying powdery chemical agent

Container body 211: PET bottle having a capacity of 280 mL

Cylinder 231: A cylinder tip was cut at a position of scale of 0.5 mL of the cylinder 231B in a syringe having an inner diameter of 9.5 mm, manufactured by HSW (a trade name: 2 mL HSW NORM-JECT), and thereafter, the above-described cylinder 231 B was internally fitted on the base end side of a chip 231A for pipette having an inner diameter of tip opening of 1.5 mm, manufactured by GILSON (a trade name: DIAMOND CHIP D5000 easy-pack, Model No. F161571).

### • Device (B) for spraying powdery chemical agent

The inner diameter of the chip 231A for pipette in the above-described device (A) for spraying powdery chemical agent was changed to 7 mm.

### • Device (C) for spraying powdery chemical agent

The capacity of the container body 211 in the above-described device (A) for spraying powdery chemical agent was changed to 500 mL.

### 2. Powdery chemical agent 230

100 mg of d.d-T-cyphenothrin was impregnated in 200 mg of fluorite to make a total amount to 300 mg (fluorite/d.d-T-cyphenothrin = 2/1).

### 3. Petri dishes (a) to (h)

Area: 63.6 cm2/Petri dish

### 4. Gas generating agent

### • Devices (A) and (B) for spraying powdery chemical agent

Water 90: 100 mL

Sodium bicarbonate 241: 3.8 g

Citric acid 243: 2.9 g

### • Device (C) for spraying powdery chemical agent

Water 90: 100 mL

Sodium bicarbonate 241: 7.5 g

Citric acid 243: 5.8 g

The test was carried out in such a manner that two of each of the devices (A) to (C) for spraying powdery chemical agent were placed in a diagonal line, and the treatment amount of the powdery chemical agent was set to 300 mg, respectively (600 mg in total in the test).

**Table 1**

| Falling amount of d.d-T-cyphenothrin; device (A) for powdery chemical agent was used | | |
|---|---|---|
| Number of test times | Placing position of Petri dish | Spreading amount (average value) per unit area (mg/m2) |
| First time | 1 m | 12.5 |
| | 2 m | 6.2 |
| Second time | 1 m | 18.0 |
| | 2 m | 1.8 |
| Third time | 1 m | 11.8 |
| | 2 m | 3.5 |
| Average | 1 m | 14.1 |
| | 2 m | 3.8 |

**Table 2**

| Falling amount of d.d-T-cyphenothrin; device (B) for powdery chemical agent was used | | |
|---|---|---|
| Number of test times | Placing position of Petri dish | Spreading amount (average value) per unit area (mg/m2) |
| First time | 1 m | 8.2 |
| | 2 m | 4.7 |
| Second time | 1 m | 7.1 |
| | 2 m | 2.1 |
| Third time | 1 m | 10.4 |
| | 2 m | 4.2 |
| Average | 1 m | 8.5 |
| | 2 m | 3.7 |

**Table 3**

| Falling amount of d.d-T-cyphenothrin; device (C) for powdery chemical agent was used | | |
|---|---|---|
| Number of test times | Placing position of Petri dish | Spreading amount (average value) per unit area (mg/m2) |
| First time | 1 m | 10.9 |
| | 2 m | 14.2 |
| Second time | 1 m | 10.9 |
| | 2 m | 10.6 |
| Third time | 1 m | 15.7 |
| | 2 m | 15.1 |
| Average | 1 m | 12.5 |
| | 2 m | 13.3 |

It can be confirmed from Tables 1 to 3 that by using the device 201 for spraying powdery chemical agent of the third embodiment, the fluorite having d.d-T-cyphenothrin impregnated therein can be diffused to the range of 2 m from the device. In addition, it could be from Tables 1 and 3 that when the capacity of the container body 211 is large, the gas generation amount at the time of spraying becomes large, and the diffusibility of the powdery chemical agent 230 is liable to increase (the powdery chemical agent flies far).

It has been understood from the foregoing results that the device 201 for spraying powdery chemical agent of the third embodiment as shown in FIG. 9 is a very effective device for spraying powdery chemical agent capable of efficiently spraying and diffusing the chemical agent even in a broad air space.

It is to be noted that the present application is based on a Japanese patent application filed on April 17, 2013 (Japanese Patent Application No. 2013-086722), a Japanese patent application filed on July 1, 2013 (Japanese Patent Application No. 2013-137894), and a Japanese patent application filed on July 1, 2013 (Japanese Patent Application No. 2013-137895), the entireties of which are incorporated by reference.

### INDUSTRIAL APPLICABILITY

According to the device for spraying powdery chemical agent and the process for spraying powdery chemical agent of the present invention, the powdery chemical agent can be sprayed and diffused without using a medium, such as a decomposed gas, a solvent, etc. In addition, it is not needed to dissolve the powdery chemical agent in a solvent or a liquefied gas, and it is not needed to apply heat for diffusion, and thus, chemical agents that are low in solubility, chemical agents that are instable in liquid state, and chemical agents that are easily decomposed by heat can be used.

In addition, in the powdery chemical agent, by merely sealing the upper side open end with a cap, a rubber stopper, a sealing film, or the like at the time of preservation, the inside of the cylinder can be hermetically sealed, and therefore, its handling is easy. Moreover, the powdery chemical agent in the cylinder part can also be prevented from occurrence of decomposition by moisture of the outside air or oxidation, so that it can be stably preserved.

Furthermore, since the device for spraying powdery chemical agent and the process for spraying powdery chemical agent of the present invention are not required to use a fixed power source, heat from a flame, or the like, there is no concern about a fire or the like, and the device is safe, and a large-scaled apparatus is not needed. Thus, the device can be carried simply and easily and can be used even in a place where equipment, such as a power source, etc., is not provided.

### REFERENCE SIGNS LIST

1: Device for spraying powdery chemical agent
11: Container body
13: Upper end opening
21: Tubular guide member
23: Lid part
26: Tubular part
27: Locking part
30: Powdery chemical agent
31: Tubular rupturing member
33: Main body part
37: Pressing part
41: Sealing part
43: Gas generating agent
45: Lock mechanism
51: Cylinder part
53: Lower side sliding inner peripheral wall
55: Upper side diameter-enlarged inner peripheral wall
61: Piston body
62: Bottom
63: Piston
64: Vapor tap hole
65: Skirt part
71: Cap
75: Spray nozzle
90: Water (liquid)
91: Stopper member
96: Sealing member
100: Chamber

## Claims

1. A device for spraying powdery chemical agent, the device comprising:
a container body for storing liquid therein, the container body having an upper end opening;
a tubular guide member comprising:
a lid part covering the upper end opening;
a tubular part formed in the lid part so as to penetrate into the lid part, both ends of the tubular part facing an interior and an exterior of the container body; and
a sealing part extending inward the container body and sealing a lower end opening of the tubular part, the tubular guide member being installed in the upper end opening;
a gas generating agent that reacts with the liquid stored in the container body to generate reactive gas, the gas generating agent being contained in the tubular part;
a tubular rupturing member held by the tubular guide member in a movable state toward the sealing part, wherein a pressing part is provided on a lower end part of the tubular rupturing member and breaks the sealing part to allow the gas generating agent to fall in the liquid stored in the container body;
a piston sliding airtightly against a lower side sliding inner peripheral wall of a cylinder part provided in an upper end part of the tubular rupturing member, and defining an air space relative to an upper side diameter-enlarged inner peripheral wall of the cylinder part; and
a powdery chemical agent that is a chemical agent itself or a chemical agent impregnated in or mixed with a powder, the powdery chemical agent being stored on the piston.

2. The device for spraying powdery chemical agent according to claim 1, wherein the piston comprises a tubular piston body having a closed-bottom and a vapor tap hole bored in a vicinity of a bottom of a peripheral wall of the piston body; and
wherein a sealing part is provided in an upper end part of the upper side diameter-enlarged inner peripheral wall and slides airtightly against a peripheral wall of the piston body.

3. The device for spraying powdery chemical agent according to claim 2, wherein a cap provided with a spray nozzle is provided on an upper open end of the piston body.

4. The device for spraying powdery chemical agent according to claim 1, wherein a lock mechanism obstructing a movement of the tubular rupturing member toward the sealing part is provided between the tubular guide member and the tubular rupturing member.

5. A device for spraying powdery chemical agent, the device comprising:
a container body for storing liquid therein, the container body having an upper end opening;
a bag body which is covered on an upper opening of the container body and stores a gas generating agent therein, the gas generating agent reacting with the liquid stored in the container body to generate reactive gas;
a tubular guide member installed in an upper part of the container body;
a tubular rupturing member which is held by the tubular guide member in a movable state toward the bag body, and comprises a tip blade for rupturing the bag body to allow the gas generating agent to fall in the liquid stored in the container body;
a cylinder part disposed inward the tubular rupturing member, wherein both open ends of the cylinder part are able to communicate an interior and an exterior of the container body with each other;
a piston sliding airtightly against a lower side sliding inner peripheral wall of the cylinder part and having an air space relative to an upper side diameter-enlarged inner peripheral wall of the cylinder part; and
a powdery chemical agent that is a chemical agent itself or a chemical agent impregnated in or mixed with a powder, the powdery chemical agent being stored in the piston.

6. The device for spraying powdery chemical agent according to claim 5, wherein a lock mechanism obstructing a movement of the tubular rupturing member toward the bag body is provided between the tubular guide member and the tubular rupturing member.

7. The device for spraying powdery chemical agent according to claim 5, wherein a cap provided with a spray nozzle is provided on an upper side open end side of the cylinder part.

8. The device for spraying powdery chemical agent according to claim 5, wherein the tip blade formed into annular shape so as to be opposed to an upper surface of the bag body on the outside of a radial direction from a lower side open end of the cylinder part breaks the bag body such that the bag body is annularly bored.

9. A device for spraying powdery chemical agent, the device comprising:
a container body having an upper end opening;
a cylinder installed in a lid body covering the upper end opening, both ends of the cylinder face an interior and an exterior of the container body;
a powdery chemical agent that is a chemical agent itself or a chemical agent impregnated in or mixed with a powder, the powdery chemical agent being contained in the cylinder; and
a piston sliding airtightly against a lower side sliding inner peripheral wall of the cylinder, and having an air space relative to an upper side diameter-enlarged inner peripheral wall of the cylinder,
wherein reactive gas is generated in the container body to push the piston up along the lower side sliding inner peripheral wall.

10. The device for spraying powdery chemical agent according to claim 9, wherein a spray nozzle is provided on an upper side open end of the cylinder.

11. The device for spraying powdery chemical agent according to claim 10, wherein the piston which has reached the upper side diameter-enlarged inner peripheral wall of the cylinder is obstructed from the movement toward the spray nozzle.

12. A device for spraying powdery chemical agent, the device comprising:
a container body for storing liquid therein;
a first cap installed in the first opening and comprising:
a lid part covering a first opening of the container body; and
a cylinder part formed in the lid part so as to penetrate into the lid part, both ends the cylinder part facing an interior and an exterior of the container body;
a piston sliding airtightly against a sliding inner peripheral wall of the cylinder part, and having an air space relative to a diameter-enlarged inner peripheral wall of the cylinder part;
a powdery chemical agent that is a chemical agent itself or a chemical agent impregnated in or mixed with a powder, the powdery chemical agent being contained in a housing chamber defined by the diameter-enlarged inner peripheral wall;
a second cap installed in a second opening of the container body and comprising:
a lid part covering the second opening of the container body;
a tubular part formed in the lid part so as to penetrate into the lid part, both ends of the tubular part facing an interior and an exterior of the container body; and
a sealing part extending inward the container body and sealing an interior side opening of the tubular part;
a gas generating agent that reacts with the liquid stored in the container body to generate reactive gas, the gas generating agent being contained in the tubular part; and
a rupturing member which is held by the second cap in a movable state toward the sealing part, wherein a pressing part is provided on a tip part of the rupturing member and breaks the sealing part to incorporate the gas generating agent into the liquid stored in the container body.

13. The device for spraying powdery chemical agent according to claim 12, wherein an elasticity energizing member provided on the first cap applies a prescribed resistance force to the piston moving from the sliding inner peripheral wall to the diameter-enlarged inner peripheral wall.

14. A method for spraying powdery chemical agent, the method comprising:
a step of generating reactive gas within a container body having an opening;
a step of installing a lid body, which is installed with a cylinder, in the opening such that an inward side open end of the cylinder faces an interior of the container body and an outward side open end of the cylinder faces an exterior of the container body, wherein the cylinder contains a piston, a powdery chemical agent that is a chemical agent itself or a chemical agent impregnated in or mixed with a powder is stored in the piston, and the piston slides airtightly against a sliding inner peripheral wall and has an air space relative to a diameter-enlarged inner peripheral wall; and
a step of moving the piston from the sliding inner peripheral wall to the diameter-enlarged inner wall by a pressure the reactive gas which has reached a prescribed pressure value or more within the container body, thereby spraying and diffusing the powdery chemical agent stored in the cylinder.
